# EUROPÄISCHE PATENTSCHRIFT

(11) **EP 2 026 243 B1**
(45) Veröffentlichungstag und Bekanntmachung des Hinweises auf die Patenterteilung: **28.07.2010**
(21) Anmeldenummer: 08019623.1
(22) Anmeldetag: 19.03.2007
(51) Int. Cl.: G06K 7/00, G06K 19/077

(54) **Energiearme Detektion eines Transponders durch eine Lese-Einheit und System zur Identitätsfeststellung oder/und Berechtigungsfeststellung, ggf. in Form eines Schliesssystems**
Low energy detection of a transponder via a read unit and system for identifying and/or determining authorisation, where applicable as a locking system
Détection à faible énergie d'un transpondeur par une unité de lecture et système de constatation d'identité ou/et de constatation d'autorisation, le cas échéant sous forme de système de fermeture

(43) Veröffentlichungstag der Anmeldung: 18.02.2009
(62) Teilanmeldung aus: 07005627.0
(73) Patentinhaber: SimonsVoss Technologies AG, 85774 Unterföhring (DE)
(72) Erfinder: Do, Tien-Toan, Dr., 80933 München (DE); Voss, Ludger, Dr., 80675 München (DE)
(74) Vertreter: Jordan, Volker Otto Wilhelm

(56) Entgegenhaltungen:
- EP-A2- 0 933 733
- US-A- 5 815 557
- US-A- 6 035 677
- US-A- 6 150 948

## Beschreibung

Die Erfindung betrifft ein System zur Identitätsfeststellung oder Berechtigungsfeststellung und zum Ermöglichen bzw. Verhindern eines physikalischen Zugangs zu einer Zieleinrichtung, umfassend: eine der Zieleinrichtung zugeordnete erste Einheit, welche eine Feststelleinrichtung aufweist, die dafür ausgeführt ist, auf Grundlage eines (vorzugsweise verschlüsselten oder/und bidirektionalen) Datenaustausches über eine erste Luftschnittstelle der ersten Einheit mit einer zweiten Einheit eine Identität oder eine Berechtigung festzustellen, wobei die erste Luftschnittstelle für einen drahtlosen Datenaustausch über eine erste Reichweite ausgelegt ist; und wenigstens eine der ersten Einheit zugeordnete zweite Einheit, welche eine Mitteilungseinrichtung aufweist, die dafür ausgeführt ist, auf Grundlage von vorhandenen Identifizierungsdaten oder Berechtigungsdaten und des über die erste Luftschnittstelle und eine zweite Luftschnittstelle der zweiten Einheit über die erste Reichweite durchgeführten Datenaustausches der Feststelleinrichtung der ersten Einheit eine Identität oder eine Berechtigung mitzuteilen. Die erste Einheit weist wenigstens einen Aktor auf oder der ersten Einheit ist eine gesonderte Aktoreinrichtung mit wenigstens einem Aktor zugeordnet. Die erste Einheit ist für eine Betätigung oder Auslösung des Aktors in Abhängigkeit von der Feststellung einer Identität bzw. Berechtigung durch die Feststelleinrichtung ausgeführt.

Aus EP 0 933 733 A2 ist ein SmartCard-Bankingsystem bekannt, welches eine kontaktlose Kommunikationsschnittstelle verwendet. Gemäß einer im Zusammenhang mit Fig. 10 behandelten Ausgestaltung wird eine SmartCard mit einer IR-Kommunikationsschnittstelle verwendet, die direkt mit einem Bankomat bzw. über andere Gerätschaften direkt mit einer Finanzinstitution kommuniziert.

Gemäß anderen Ausführungsvarianten kommt ein SmartCard-Lesegerät zum Einsatz, damit eine jeweilige SmartCard, die keine IR-Kommunikationsschnittstelle aufweist, unter Vermittlung des SmartCard-Lesers mit dem Bankomat kommuniziert. Dieser SmartCard-Leser dient also dazu, für SmartCards, die keine IR-Schnittstelle oder andere drahtlose Schnittstellen aufweisen, eine drahtlose, nämlich durch den SmartCard-Leser vermittelte Kommunikation mit dem Bankomat vorzusehen. Ein weiterer Zweck des gegenüber dem Bankomat gesonderten SmartCard-Lesers ist, eine Abnutzung von physikalischen Kontakten des Bankomats zu vermeiden.

US 5,185,557 offenbart ein auf RF-Übertragungen basierendes Einlasssystem, welches eine drahtlose Kommunikation mit Schlössern, Schlüsseln und zugeordneten Komponenten vorsieht. Offenbart sind verschiedene Ausgestaltungen, bei denen ein Mobiltelefon oder ein Pager eingesetzt wird, um einen physikalischen Zugang zu einer Zieleinrichtung zu ermöglichen.

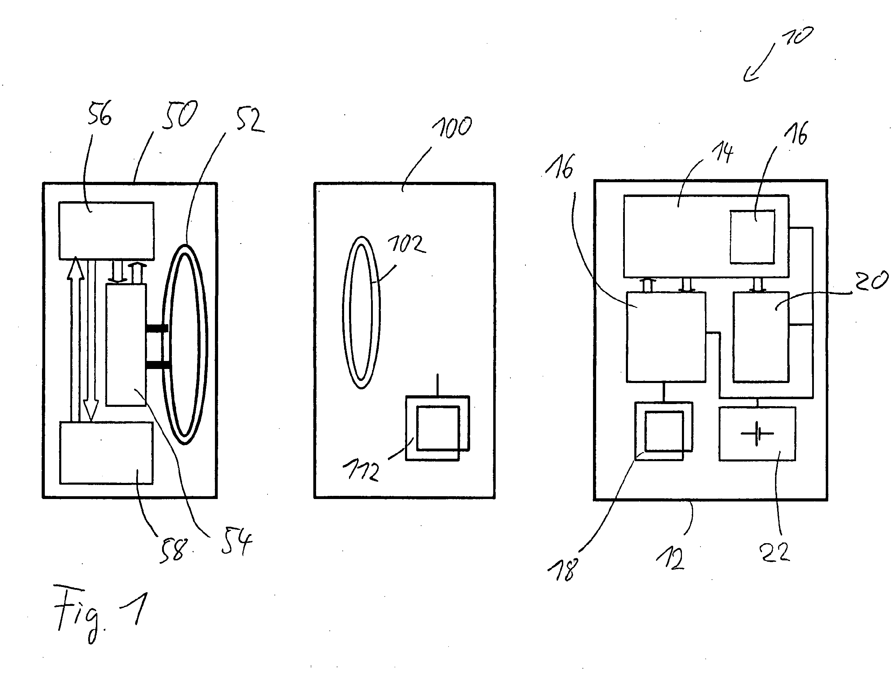

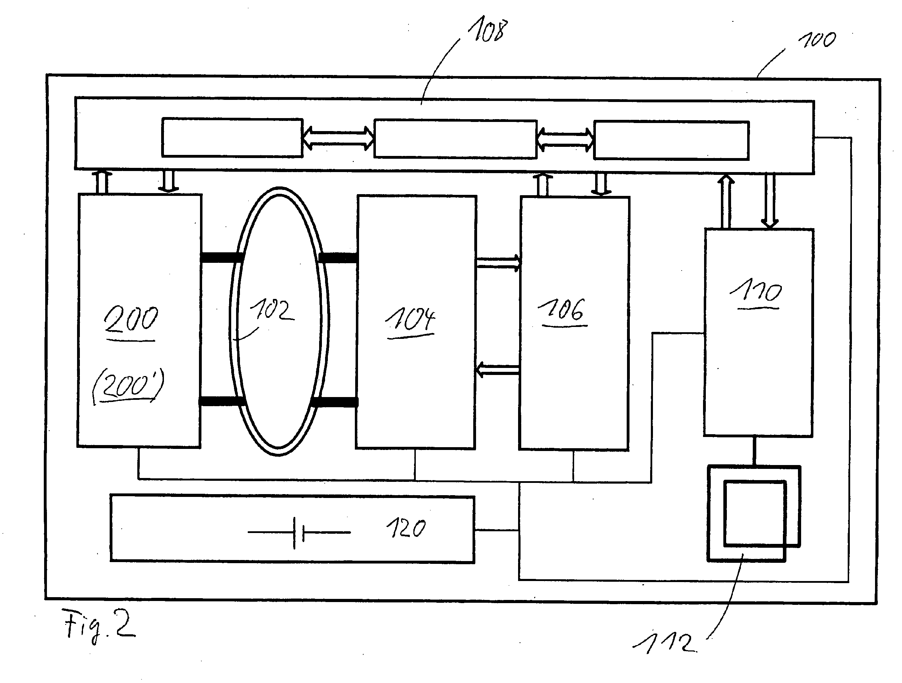

Nach einer im Zusammenhang mit Fig. 1 erläuterten Systemvariante ist eine Fernprogrammierung eines Schlosses mittels eines Computersystems, z. B. von einem Mobiltelefon, aus, möglich. Das so vorprogrammierte Schloss wird dann unmittelbar an diesem mittels Eingabe einer PIN oder mittels eines RFID-Tags oder ähnliches geöffnet. Ähnlich hierzu wird bei einer Systemvariante gemäß Fig. 2 vom Mobiltelefon aus vermittels des Computersystems ein intelligenter Schlüssel programmiert, so dass dieser ein betreffendes Schloss öffnen kann.

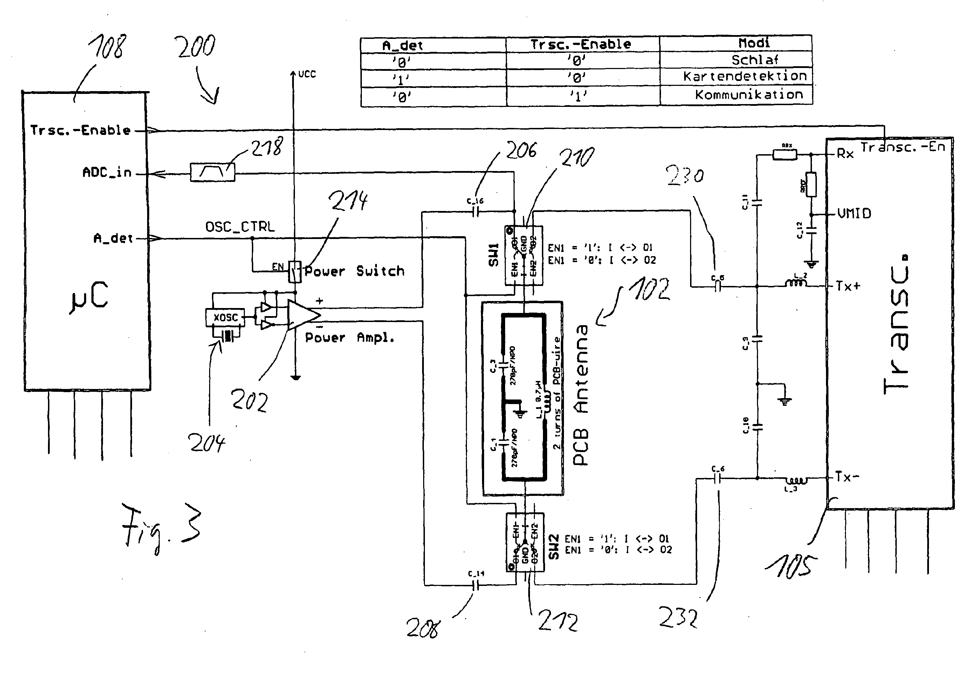

Eine im Zusammenhang mit Fig. 3 erläuterte Systemvariante ermöglicht, dass ein Schloss über das Computersystem scharf gemacht wird, so dass dann das Schloss z. B. mittels einer Tonausgabe eines Mobiltelefons oder durch ein RF-Signal des Mobiltelefons selbst oder durch eine manuelle Einwirkung geöffnet werden kann.

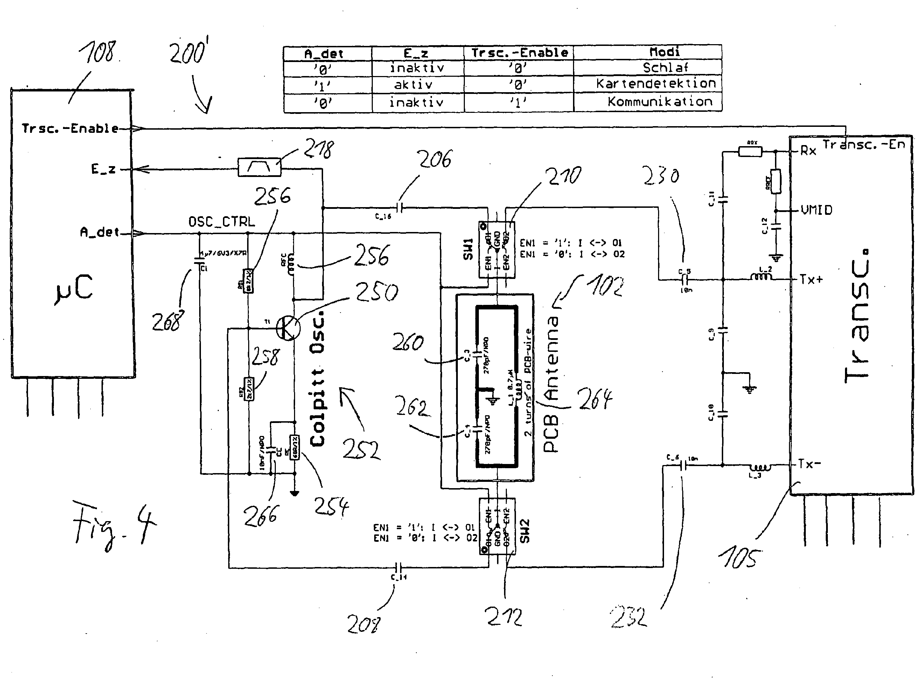

Eine im Zusammenhang mit Fig. 4 behandelte Systemvariante bezieht sich auf die Fernprogrammierung eines "Fahrzeug-Schlosses", damit dieses auf bestimte stationäre Identifizierungsvorrichtungen anspricht und sich dann der Laderaum öffnen lässt.

Zur drahtlosen Interaktion zwischen dem Computersystem und einem jeweiligen Schloss werden als in Frage kommende Möglichkeiten speziell ein Paging-System und ein Mobiltelefonsystem vorgeschlagen. Bei solchen Systemen erfolgt die drahtlose Interaktion über die Infrastruktur eines Mobiltelefonproviders bzw. Paging-Providers.

US 6,035,677 offenbart einen Schlüssel mit integriertem RFID-Tag, der offenbar für eine elektronische Wegfahrsperre eines Kraftfahrzeugs vorgesehen ist. Aus US 6,150,948 ist ein RFID-Leser bekannt, der vermittels eines Detektors wie etwa eines PIR-Detektors von einem Ruhezustand geringen Energieverbrauchs in einen aktiven Zustand höheren Energieverbrauchs umschaltbar ist.

Bekannt sind diverse Einrichtungen und Verfahren zum Identifizieren von Personen und Ermöglichen bzw. Verhindern eines logischen und/oder physikalischen Zugangs zu einer Zieleinrichtung, die beispielsweise auf Grund tragbarer und stationärer Identifizierungseinheiten oder Identifizierungsmedien (kurz Identmedien) arbeiten, beispielsweise in Form von Schlüsseln, Chipkarten und Transpondern. Es wird hierzu auf die DE 103 41 370 A1, die WO 2005/027055 A1, die EP 1 253 559 A2 und die DE 20 2006 006 859 U1 der Anmelderin verwiesen sowie auf den darin behandelten Stand der Technik. Von allgemeinem Interesse in diesem Zusammenhang sind auch die EP 0 744 843 B1, die EP 1 643 457 A1, die DE 102 40 396 A1 und die DE 203 06 923 U1 sowie der darin behandelte Stand der Technik. Die Offenbarung der angesprochenen Schriften der Anmelderin wird durch Bezugnahme in die Offenbarung der vorliegenden Anmeldung einbezogen.

Derartige Systeme und Verfahren zum Identifizieren sind speziell auch im Zusammenhang mit sog. elektronischen oder digitalen Schließzylindern auf drahtlosem Wege für das Öffnen einer Tür entsperrbar ist. Es wird hierzu auf den Transponder 3064, den Biometrie-Transponder Q3007, den digitalen Schließzylinder 3061 sowie allgemein das digitale Schließ- und Organisationssystem 3060 der Anmelderin hingewiesen. Ferner wird hingewiesen auf die zu diesem System zugehörige, als Alternative zu einem Transponder verwendbare, stationär anbringbare Pin-Code-Tastatur 3068, mittels der durch Eingabe eines die Zugangsberechtigung angebenden Pin-Codes ein jeweiliger digitaler Schließzylinder für ein Türöffnen auf drahtlosem Wege entsperrbar ist. Zum System der Anmelderin gehört ferner auch eine als Smart-Relais 3063 bezeichnete Relais-Einheit, mit der unter Verwendung eines Transponders oder einer Pin-Code-Tastatur sonstige Maschinen oder Anlagen gesteuert werden können.

Die Luftschnittstellen der angesprochenen Komponenten des Systems der Anmelderin arbeiten in einem Niederfrequenzbereich mit vergleichsweise geringer Reichweite, um gezielt einen digitalen Schließzylinder für das Öffnen einer Tür entsperren zu können oder gezielt bestimmte Einrichtungen oder Anlagen ansteuern zu können und Fehlbedienungen durch Ansteuerung weiter entfernt liegender Schließzylinder oder Anlagen sicher zu vermeiden. Dem System liegt insoweit die Philosophie zugrunde, betreffend die Ermöglichung einer Türöffnung oder Ansteuerung irgend eines Geräts oder einer Einrichtung für die Luftschnittstelle zwischen der Identifizierungseinheit (Transponder bzw. Pin-Code-Tastatur) und zwischen dem digitalen Schließzylinder bzw. der Relais-Einheit gewissermaßen auf eine "Nahwirkung" zu setzen, um mittels einer tragbaren Identifizierungseinheit verschiedene Türen gezielt öffnen bzw. verschiedene Geräte gezielt ansteuern zu können, ohne erst noch einen die bestimmte Tür oder das bestimmte Gerät bzw. die bestimmte Anlage identifizierenden Code oder dergleichen eingeben zu müssen.

Bezug nehmend auf das angesprochene System zur Identitätsfeststellung bzw. Berechtigungsfeststellung und Ermöglichen bzw. Verhindern eines physikalischen Zugangs zu einer Zieleinrichtung können bei dem bekannten System der Anmelderin der digitale Schließzylinder oder das Smart-Relais jeweils als erste Einheit und die verschiedenen Transponder und die PIN-Code-Tastatur jeweils als zweite Einheit identifiziert werden.

Es wurde schon daran gedacht, als Firmenausweis oder dergleichen vorgesehene Identmedien, beispielsweise sog. SmartCards, mit einer Schlüsselfunktion zu versehen, da heutzutage beispielsweise Großunternehmen dazu übergehen, die visuelle Identifizierungsfunktion (mittels Foto auf Firmenausweis) sowie eine elektronische Identifizierungsfunktion auf ein- und dasselbe Identmedium zu bringen. Die Vereinheitlichung von Firmenausweisverwaltung und Schlüsselverwaltung führt zu offensichtlichen Einsparpotentialen. Ein Lösungsansatz, um SmartCards oder andere als Firmenausweis dienende Ident-Cards mit einer Schlüsselfunktion für elektronische Schließsysteme, insbesondere sog. elektronische oder digitale Schließzylinder, auszustatten, ist in der EP 1 253 559 A2 beschrieben. Diese Offenlegungsschrift schlägt einen Identkartenhalter zur Vereinigung von Firmenausweis und Schlüsselfunktion vor, der eine Identkarten-Lese-Einrichtung sowie eine Steuerungseinrichtung und eine Nahbereichsfunkschnittstelle für die Kommunikation mit einem Elektronikzylinder einer Schließanlage aufweist. Der Identkartenhalter ermöglicht für die Schließanlage die Verwendung einer an sich für andere Zwecke vorgesehenen Indentkarte anstelle eines die Nahbereichsfunkschnittstelle aufweisende, speziell auf den Elektronikzylinder bezogenen aktiven bzw. passiven Transponders etwa gemäß DE 106 14 215, ohne dass neue Identkarten mit einer derartigen Nahbereichsfunkschnittstelle ausgegeben werden müssen. Bezug nehmend auf das angesprochene System zum sicheren personalisierten Identifizieren und ggf. Ermöglichen bzw. Verhindern eines logischen oder/und physikalischen Zugangs zu einer Zieleinrichtung kann der Identkartenhalter zusammen mit einem jeweiligen Firmenausweis als zweite Einheit des Systems identifiziert werden.

Demgegenüber möchte die Erfindung ein System der angesprochenen Art schaffen, bei dem es ohne weiteres möglich ist, verschiedene, typischerweise verschiedenen Personen zugeordnete Identmedien, die zwar an sich für einen drahtlosen Datenaustausch geeignet sind, die aber von sich aus mit der ersten Einheit nicht drahtlos in Verbindung treten können, zur personalisierten Identifizierung bzw. Berechtigungsfeststellung gegenüber der ersten Einheit tauglich zu machen.

Zur Lösung dieser Aufgabe stellt die Erfindung bereit ein System mit den Merkmalen des Anspruchs 1.

Es dient nach der Erfindung also nicht die zweite Einheit als Identmedium oder die Kombination aus einem Identmedium und einem mechanisch damit verbundenen Halter, sondern die zweite Einheit ist gegenüber dem tragbaren Identmedium eine gesonderte, unabhängig von diesem vorzugsweise stationär in Zuordnung zur ersten Einheit platzierbare Einheit, die mit dem tragbaren Identmedium drahtlos verbindbar ist, um auf Grundlage zumindest der vom Identmedium getragenen Identifizierungsdaten die Identitätsfeststellung bzw. Berechtigungsfeststellung unter Durchführung einer drahtloser Datenkommunikation zwischen der ersten und der zweiten Einheit und der zweiten Einheit und dem Identmedium zu ermöglichen.

Der Erfindungsvorschlag ist speziell auch, aber nicht ausschließlich darauf gerichtet, Drahtlosschnittstellen aufweisende SmartCards, Transponder und dgl., insbesondere RFID- oder NFC-Transponder, für die personalisierte Identifizierung bzw. den personalisierten Berechtigungsnachweis gegenüber der ersten Einheit, beispielsweise einer Schließanlage oder einem digitalen Schließzylinder, wie schon angesprochen, tauglich zu machen. Hierzu reicht es im Prinzip schon aus, wenn mittels der zweiten Einheit von dem Identmedium getragene Identifizierungsdaten der ersten Einheit mitgeteilt werden, wobei all diese Daten auf drahtlosem Wege ausgelesen bzw. übermittelt werden. Für eine höhere Sicherheit ist es aber bevorzugt, dass die Identitätsfeststelleinrichtung eine Authentifizierungseinrichtung ist und dafür ausgeführt ist, eine mitgeteilte Identität bzw. Berechtigung zu authentifizieren, auf Grundlage von von einer Authentisierungseinrichtung auf drahtlosem Wege gelieferten Authentisierungsdaten. Der Begriff Authentifizierung bezeichnet hierbei den Vorgang der Überprüfung (Verifikation) der behaupteten Identität bzw. Berechtigung eines Gegenübers (beispielsweise einer das tragbare Identmedium tragenden Person bzw. das Identmedium selbst) in einem Dialog, wohingegen der Begriff Authentisierung den Vorgang des Nachweises der eigenen Identität bzw. Berechtigung bezeichnet. Häufig werden diese beiden Ausdrücke synonym verwendet. Relevante Authentisierungsverfahren beruhen auf der Benutzung eines Besitzes (das eine Identität behauptende Subjekt besitzt etwas, beispielsweise einen Schlüssel), der Preisgabe eines Wissens (das Subjekt weiß etwas, beispielsweise ein Passwort) und der Anwesenheit des Subjektes selbst (das Subjekt ist etwas, beispielsweise Verwendung eine biometrischen Merkmals). All diese Ansätze kommen im Zusammenhang mit dem Erfindungsvorschlag in Betracht.

Es kommt durchaus in Betracht, dass seitens der ersten Einheit eine Authentifizierung auf Grundlage einer durch die zweite Einheit durchgeführten Authentisierung und auf Seiten der zweiten Einheit eine Authentifizierung auf Basis einer vom Identmedium durchgeführten Authentisierung durchgeführt wird. Ferner kann auf Seiten der ersten Einheit eine Authentifizierung auf Basis einer durch das Identmedium unter Vermittlung der zweiten Einheit durchgeführten Authentisierung durchgeführt werden. Ferner könnte auch auf Seiten des Identmedium eine Authentifizierung durchgeführt werden, insbesondere auf Basis einer durch einen Benutzer durch Wechselwirkung mit dem Identmedium durchgeführten Authentisierung, beispielsweise durch Eingabe eines PIN-Codes oder durch Eingabe eines biometrischen Merkmals mittels eines Biometriesensors. Soweit etwa auf Seiten des Identmediums oder auf Seiten der zweiten Einheit die Feststellung einer Identität bzw. Berechtigung erfolgt, vorzugsweise authentifiziert erfolgt, reicht es im Prinzip aus, dass an die zweite Einheit bzw. an die erste Einheit nur Daten weitergegeben werden, die angeben, dass die Identität bzw. die Berechtigung positiv festgestellt, vorzugsweise authentifiziert festgestellt, wurde, wobei ggf. noch die Art der Berechtigung angegeben wird. Diese von der zweiten Einheit bzw. der ersten Einheit drahtlos erhaltenen Daten stellen in diesem Fall von einer bestimmten Person oder einem bestimmten Identmedium abstrahierte Identifizierungsdaten bzw. Berechtigungsdaten dar, die die Feststellung einer abstrakten Identität bzw. Berechtigung ermöglichen, etwa der Identität als Administrator oder Zugangsberechtigter, ggf. mit einer eine bestimmte Reichweite habenden Berechtigung. Es braucht so seitens der ersten Einheit bzw. seitens der zweiten Einheit keine Pflege einer Datenbank, die personenbezogene bzw. Identmedien bezogene Identitäten und Berechtigungen angibt, erfolgen, sondern es reicht, wenn das Identmedium Identifizierungsdaten trägt oder bereitstellen kann, die gewissermaßen als Schlüsseldaten die Zugehörigkeit zu einer abstrakten Identität oder das Vorliegen einer bestimmten Berechtigung nachweisen. Seitens des Identmediums oder/und seitens der zweiten Einheit oder/und seitens der ersten Einheit durchgeführten Authentifizierungen können im Falle einer solchen Realisierung sich somit vor allem darauf richten, einen Missbrauch zu verhindern und insbesondere zu überprüfen, ob der Benutzer des Identmediums der "richtige" Benutzer ist bzw. dass das mit der zweiten Einheit wechselwirkende Identmedium ein "echtes" Identmedium ist bzw. dass die mit der ersten Einheit wechselwirkende zweite Einheit eine "echte" zweite Einheit ist.

Vor dem Hintergrund dieser allgemeinen Erläuterungen wird konkret vorgeschlagen, dass die Feststelleinrichtung der ersten Einheit eine Authentifizierungseinrichtung ist und dafür ausgeführt ist, eine mitgeteilte Identität bzw. Berechtigung zu authentifizieren und die Mitteilungseinrichtung eine Authentisierungseinrichtung ist und dafür ausgeführt ist, die mitgeteilte Identität bzw. Berechtigung durch Übermittlung von Authentisierungsdaten über die zweite und die erste Luftschnittstelle nachzuweisen. Weiterbildend wird vorgeschlagen, dass die als Authentisierungseinrichtung dienende Mitteilungseinrichtung dafür ausgeführt ist, die Authentisierungsdaten über die dritte Luftschnittstelle und die Identmedium-Luftschnittstelle von dem Identmedium zu empfangen oder aus diesem auszulesen.

Vorzugsweise alternativ, gewünschtenfalls aber auch zusätzlich, kann man vorsehen, dass die Feststelleinrichtung der ersten Einheit eine Authentifizierungseinrichtung ist und dafür ausgeführt ist, eine mitgeteilte Identität bzw. Berechtigung zu authentifizieren, und eine Authentisierungseinrichtung des Identmediums dafür ausgeführt ist, unter Vermittlung der Mitteilungseinrichtung die mitgeteilte Identität bzw. Berechtigung durch Übermittlung von Authentifizierungsdaten über die dritte Luftschnittstelle und die Identmedium-Luftschnittstelle sowie über die zweite und die erste Luftschnittstelle nachzuweisen. Auch in diesem Falle können alle angesprochenen Ansätze der Authentifizierung zum Einsatz kommen. Im Gegensatz zu der zuvor angesprochenen Ausgestaltung weist nach dem alternativen Weiterbildungsvorschlag das Identmedium die Authentisierungseinrichtung auf, und die zweite Einheit kann primär nur eine Relaisfunktion erfüllen, um die Kommunikation zwischen der ersten Einheit und dem Identmedium zu ermöglichen.

Alternativ oder zusätzlich zu der Ausführung der Feststelleinrichtung der ersten Einheit als Authentifizierungseinrichtung kann vorgesehen sein, dass die Mitteilungseinrichtung eine Authentifizierungseinrichtung ist und dafür ausgeführt ist, für die positive Feststellung einer Identität bzw. Berechtigung diese zu authentifizieren, und eine Authentisierungseinrichtung des Identmediums dafür ausgeführt ist, die Identität bzw. Berechtigung durch Übermittlung von Authentisierungsdaten über die dritte Luftschnittstelle und die Identmedium-Luftschnittstelle nachzuweisen.

Im Falle der Ausführung des Identmediums mit einer eigenen Feststelleinrichtung kann diese eine Authentifizierungseinrichtung sein, die dafür ausgeführt ist, für die positive Feststellung einer Identität bzw. Berechtigung diese zu authentifizieren, vorzugsweise auf Grundlage einer Interaktion mit dem Benutzer etwa im Wege einer PIN-Code-Eingabe oder der Eingabe eines biometrischen Merkmals. Die letzteren beiden Ausgestaltungen kommen insbesondere in Betracht, wenn das Identmedium ein elektronisches Gerät ist, beispielsweise ein Mobiltelefon oder ein mobiler Computer.

Betreffend die seitens der ersten Einheit bzw. seitens der zweiten Einheit durchführbaren Authentifizierungen wird als besonders bevorzugt vorgeschlagen, dass die Authentifizierungseinrichtung der ersten Einheit und die Authentisierungseinrichtung der zweiten Einheit bzw. des Identmediums bzw. dass die Authentifizierungseinrichtung der zweiten Einheit und die Authentisierungseinrichtung des Identmediums dafür ausgeführt sind, für die Durchführung einer Challenge-Response-Authentifizierung zusammenzuwirken. Die Challenge-Response-Authentifizierung ist ein Beispiel für eine Authentifizierung anhand von Wissen, bei der das Wissen aber nicht selbst übermittelt wird, um die Gefahr der Preisgabe des Wissens auszuschließen. Stattdessen wird nur ein Beweis dafür geliefert, dass das sich authentisierende Subjekt das Wissen zweifelsfrei besitzt.

Anzumerken ist, dass im Rahmen der Erfindungs- und Weiterbildungsvorschläche diverse Authentisierungs- bzw. Authentifizierungsmethoden zum Einsatz kommen können. Eine Authentifizierung bzw. Authentisierung durch spezielle Verfahren ist - wie schon angesprochen - aber nicht zwingend. Die Identitätsfeststellung bzw. Berechtigungsfeststellung kann auch alleine auf Basis der vom Identmedium getragenen Identifizierungsdaten erfolgen, die gemäß in Frage kommenden Realisierungsmöglichkeiten entweder von der zweiten Einheit oder von der ersten Einheit für die Identitätsfeststellung bzw. Berechtigungsfeststellung ausgewertet werden. Bei solchen Realisierungen würde die Authentifizierung sich gewissermaßen aus der Lieferung dieser Daten selbst ergeben.

Erfindungsgemäß ist die erste Reichweite merklich größer als die zweite Reichweite, vorzugsweise um mindestens etwa einen Faktor 3 bis 10. Es wird beispielsweise daran gedacht, dass die erste Reichweite mindestens etwa 20 cm, vorzugsweise mindestens etwa 70 cm, höchstvorzugsweise mindestens etwa 2,5 cm beträgt und die zweite Reichweite maximal etwa 10 cm, vorzugsweise maximal etwa 5 cm beträgt. Die Identmedium-Luftschnittstelle kann also eine wesentlich kürzere Reichweite aufweisen als die erste und zweite Luftschnittstelle der ersten Einheit bzw. der zweiten Einheit. Es können so Identmedien zur Identifizierung gegenüber der ersten Einheit verwendet werden, die alleine schon aus Abstandsgründen direkt nicht mit der ersten Einheit zusammenwirken können.

Ferner kann mittels der zweiten Einheit eine Anpassung zwischen verschiedenen Datenübertragungsstandards bzw. Datenübertragungstechniken erreicht werden. Man kann dementsprechend vorsehen, dass die erste und die zweite Luftschnittstelle für eine Datenübertragung gemäß einer ersten Übertragungstechnik oder/und nach einem ersten Übertragungsstandard ausgeführt sind und dass die dritte Luftschnittstelle und die Identmedium-Luftschnittstelle für eine Datenübertragung gemäß einer zweiten, von der ersten verschiedenen Übertragungstechnik oder/und nach einem zweiten, von dem ersten verschiedenen Übertragungsstandard ausgeführt sind.

Gemäß einer bevorzugten Ausführungsform dient eine Lese-Einheit, vorzugsweise eine RFID- oder eine NFC-Lese-Einheit als zweite Einheit. Die Lese-Einheit umfasst: wenigstens eine Luftschnittstelle, die dafür ausgeführt ist, in wenigstens einem Kopplungs-Betriebszustand der Lese-Einheit wenigstens eines von einem elektrischen Wechselfeld und einem magnetischen Wechselfeld und einem elektromagnetischen Strahlungs-Wechselfeld zu erzeugen, um induktiv oder/und kapazitiv oder/und elektromagnetisch an einen in einem Zuordnungsbereich befindlichen Transponder, ggf. RFID- oder NFC-Transponder, koppeln zu können; eine Steuereinrichtung, die dafür ausgeführt oder programmiert ist, in dem Kopplungs-Betriebszustand mittels der Luftschnittstelle auf einen angekoppelten Transponder anzusprechen, zur Durchführung einer Datenkommunikation umfassend zumindest eines von einem Auslesen wenigstens eines Datenwerts aus dem Transponder und einem Empfangen wenigstens eines vom Transponder gesendeten Datenwerts und einem Senden wenigstens eines Datenwerts an den Transponder, oder/und zumindest im Sinne eines Erfassens des Vorhandenseins des angekoppelten Transponders; und eine die Steuereinrichtung und die Luftschnittstelle mit elektrischer Betriebsenergie versorgende elektrische Energieversorgung. Die Luftschnittstelle der Lese-Einheit stellt die dritte Luftschnittstelle dar, die zum Koppeln mit dem als Identmedium dienenden Transponder vorgesehen ist. Eine weitere, der ersten Einheit zugeordnete Luftschnittstelle der Lese-Einheit stellt die zweite Luftschnittstelle dar.

Der Energieverbrauch einer solchen Lese-Einheit kann deutlich reduziert werden, zumindest betreffend Phasen, in denen kein Datenaustausch zwischen der Lese-Einheit und einem Transponder stattfindet, insbesondere um eine Energieversorgung auf Batterie- oder Akkumulatorbasis ohne kabelgebundene Zufuhr von elektrischer Energie bei vergleichsweise langen Batterie- oder Akkumulator Standzeiten zu ermöglichen.

Dazu wird vorgeschlagen, dass in wenigstens einem Ruhe-Betriebszustand der Lese-Einheit zumindest die Luftschnittstelle ausgeschaltet ist, so dass der elektrische Energieverbrauch der Luftschnittstelle zumindest reduziert ist; dass in dem Kopplungs-Betriebszustand der Lese-Einheit die Luftschnittstelle eingeschaltet ist, so dass ein im Zuordnungsbereich befindlicher Transponder induktiv bzw. kapazitiv bzw. elektromagnetisch an diese ankoppeln kann; und dass die Steuereinrichtung dafür ausgeführt ist oder programmiert ist, selbsttätig zwischen mehreren, den Ruhe-Betriebszustand und den Kopplungs-Betriebsstand umfassenden Betriebszuständen umzuschalten.

Dadurch, dass die Luftschnittstelle in dem Ruhe-Betriebszustand ausgeschaltet ist, verbraucht die Luftschnittstelle keine oder zumindest nur in reduziertem Umfang elektrische Energie. Im Ruhe-Betriebszustand können ggf. fast alle Komponenten der Lese-Einheit ausgeschaltet sein mit Ausnahme einer Einrichtung, die selbsttätig wieder aus dem Ruhe-Betriebszustand zurückschaltet. Beispielsweise kann ein entsprechender Watchdog-Timer oder dergleichen vorgesehen sein, der in gewissen zeitlichen Abständen für eine Rückkehr der Lese-Einheit aus dem Ruhe-Betriebszustand etwa in den Kopplungs-Betriebszustand oder einen Überwachungs-Betriebszustand sorgt. Durch Umschalten der Betriebszustände der Lese-Einheit kann die Lese-Einheit trotzdem auf zugeführte Transponder reagieren, diese im Falle von passiven Transpondern mit Energie versorgen und Daten aus diesen auslesen bzw. Daten mit diesen auszutauschen. Der Energieverbrauch der Lese-Einheit wird vor allem durch den Energieverbrauch im Kopplungs-Betriebszustand der Lese-Einheit maßgeblich mitbestimmt, so dass alleine schon dadurch der Bedarf an elektrischer Energie deutlich reduziert ist, wenn die Lese-Einheit nur in zeitlichen Abständen oder periodisch den Kopplungs-Betriebszustand einnimmt. Besonders große Energieersparnis resultiert dann, wenn die Lese-Einheit den Kopplungs-Betriebszustand nur dann einnimmt, wenn tatsächlich ein Transponder im Zuordnungsbereich, ggf. Nahbereich "angeordnet ist".

Es wird in diesem Zusammenhang vor allem an zwei Möglichkeiten gedacht, nämlich, dass die Steuereinrichtung dafür ausgeführt oder programmiert ist, selbsttätig aus dem Ruhe-Betriebszustand direkt in den Kopplungs.-Betriebszustand oder aus dem Ruhe-Betriebszustand über einen gesonderten Überwachungs-Betriebszustand der Lese-Einheit in den Kopplungs-Betriebszustand umzuschalten. Ferner wird daran gedacht, dass die Steuereinrichtung dafür ausgeführt oder programmiert ist, selbsttätig aus dem Kopplungs-Betriebszustand in den Ruhe-Betriebszustand umzuschalten.

Nach einem ersten Ansatz zur Transponder-Detektion wird vorgeschlagen, dass die Steuereinrichtung dafür ausgeführt ist, in zeitlichen Abständen wiederholt aus dem Ruhe-Betriebszustand in den Kopplungs-Betriebszustand oder einen speziellen Überwachungs-Kopplungs-Betriebszustand umzuschalten, um mittels der oder einer Luftschnittstelle zu überprüfen, ob ein Transponder im Zuordnungsbereich vorhanden ist. Es kann also beispielsweise die Stromaufnahme der Lese-Einheit durch eine Art Polling-Verfahren reduziert werden, nach dem die Lese-Einheit zu gewissen Zeiten, vorzugsweise die meiste Zeit, im "Ruhe-Betriebszustand" ist, also in einer Art "Schlafmodus", in dem der Stromverbrauch gering ist, wobei die Lese-Einheit aber in zeitlichen Abständen wiederholt, ggf. periodisch (z.B. ein Mal pro Sekunde) in den Kopplungs-Betriebszustand übergeht, also "aufwacht", um festzustellen, ob sich ein Transponder im Zuordnungsbereich, ggf. dem Nahfeld der Luftschnittstelle, befindet. Hierzu muss das Wechselfeld der Luftschnittstelle vollständig oder nahezu vollständig aufgebaut werden, um anschließend etwa über die Detektion einer Felddämpfung überprüfen zu können, ob in dem Wechselfeld ein Transponder vorhanden ist. Wird kein Transponder erfasst, so geht die Lese-Einheit selbsttätig wieder in den Ruhe-Betriebszustand über.

Insbesondere wird in diesem Zusammenhang vorgeschlagen, dass eine der Steuereinrichtung zugeordnete oder zugehörige, gewünschtenfalls eine eigene Überwachungs-Luftschnittstelle vorsehende Überwachungseinrichtung dafür ausgeführt ist, im Überwachungs-Kopplungsbetriebszustand auf einen Energieverlust des Wechselfelds oder eines von der Überwachungs-Luftschnittstelle erzeugten Überwachungs-Wechselfelds durch den angekoppelten Transponder anzusprechen, um das Vorhandensein eines Transponders in dem Zuordnungsbereich oder in einem Umgebungsbereich, in welchen sich das Überwachungs-Wechselfeld erstreckt, festzustellen. Eine eine eigene Überwachungs-Luftschnittstelle aufweisende Überwachungseinrichtung ist dahingehend vorteilhaft, als dass sich eine gewisse Energieersparnis gegenüber einer ebenfalls möglichen Realisierung der Überwachung auf Grundlage der auch zur Datenkommunikation dienenden Luftschnittsstelle ergibt, da Komponenten ausgeschaltet bleiben können, die nur der Datenkommunikation und weiteren Verarbeitungen dienen.

Nach dem Polling-Ansatz zur Detektion eines Transponders im Zuordnungsbereich lässt sich der Verbrauch an elektrischer Energie durchaus nennenswert reduzieren, bezogen auf die durchschnittliche Stromaufnahme beispielsweise um 2 bis 3 Größenordnungen gegenüber einer herkömmlichen, nicht-pollendem RFID-Lese-Einheit. Es kommt für eine derartig ausgeführte Lese-Einheit durchaus eine Energieversorgung auf Batteriebasis in Betracht, wobei allerdings in einer praktischen Betrachtung Batteriewechsel in gewissen Abständen, beispielsweise im Jahresrhytmus, eine gewisse Rolle spielen werden, die für manche Anwendungen als wenig akzeptabel erscheinen werden.

Demgegenüber ist es bevorzugt, dass die Lese-Einheit eine von der Luftschnittsstelle vorzugsweise unabhängige, der Steuereinrichtung zugeordnete oder zugehörige Überwachungseinrichtung aufweist, die dafür ausgeführt ist, auf wenigstens eine Änderung in einem Umgebungsbereich der Lese-Einheit oder wenigstens eine Rückwirkung aus dem Umgebungsbereich anzusprechen, wobei die Steuereinrichtung dafür ausgeführt oder programmiert ist, auf ein Ansprechen der Überwachungseinrichtung auf die Änderung bzw. Rückwirkung mit einer Umschaltung in den Kopplungs-Betriebszustand zu reagieren, um mittels der oder einer Luftschnittstelle zu überprüfen, ob ein Transponder im Zuordnungsbereich vorhanden ist, oder/und um mittels der Luftschnittstelle die Datenkommunikation aufzunehmen. Es wird in diesem Zusammenhang vor allem daran gedacht, dass die Überwachungseinrichtung eine Überwachung des Umgebungsbereichs bei wesentlich geringerem elektrischem Energieverbrauch ermöglicht als der Energieverbrauch der Luftschnittstelle im Kopplungs-Betriebszustand. Ist dies der Fall, so ermöglicht die Überwachungseinrichtung eine Reduzierung des Verbrauchs an elektrischer Energie im zeitlichen Mittel dadurch, dass der Kopplungs-Betriebszustand nur dann eingenommen werden muss, wenn die Überwachungseinrichtung auf eine Änderung in dem Umgebungsbereich oder eine Rückwirkung aus dem Überwachungsbereich angesprochen hat, die durch Zuführen eines zugeordneten Transponders in den Zuordnungsbereich ausgelöst sein könnte, so dass dann der Kopplungs-Betriebszustand nur noch eingenommen werden muss um zu überprüfen, ob tatsächlich ein Transponder im Zuordnungsbereich vorhanden ist, oder um sofort oder nach einer solchen Überprüfung die Datenkommunikation mit dem Transponder aufzunehmen.

Man kann daran denken, dass die Überwachungseinrichtung im Ruhe-Betriebszustand aktiv ist oder im Ruhe-Betriebszustand in zeitlichen Abständen wiederholt aktivierbar ist, um den Umgebungsbereich auf das Auftreten wenigstens einer Änderung bzw. Rückwirkung zu überwachen. Es ist im Prinzip also denkbar, dass die Überwachungseinrichtung ständig aktiv ist, um den Umgebungsbereich zu überwachen. In der Regel wird dies aber nicht erforderlich sein und es kommt ein Polling-Betrieb für die Überwachungseinrichtung in Betracht, um insoweit auch den Verbrauch der Überwachungseinrichtung an elektrischer Energie im zeitlichen Mittel möglichst klein zu halten.

Es wird auf die erfindungsgemäße Ausführung der ersten Einheit bzw. der dieser zugeordneten Aktuatoreinrichtung mit wenigstens einem Aktuator Bezug genommen. Weiterbildend wird vorgeschlagen, dass die erste Einheit eine Schließeinheit ist, die in Abhängigkeit von einer erfolgreichen Identifizierung vermittels des Aktors den physikalischen Zugang freigibt, beispielsweise das Öffnen einer Tür auslöst oder entsperrt. Besonders bevorzugt ist vorgesehen, dass die erste Einheit in einen elektronischen Schließzylinder integriert ist. Eine zweckmäßige Möglichkeit ist hierbei die Integration der ersten Einheit in eine Handhabe des Schließzylinders, die im Falle einer Tür auf einer Seite eines Türblatts von diesem vorsteht. In diesem Falle kann vorgesehen sein, dass bei geschlossener Tür die zweite Einheit auf der gegenüber der die erste Einheit aufweisenden Handhabe anderen Seite der Tür angeordnet ist, wodurch beispielsweise ermöglicht wird, das Identmedium mit sehr kurzer Reichweite, beispielsweise passive RFID-Karten mit einer Übertragungsweite von nur 3 bis 5 cm, vermittels der zweiten Einheit mit der ersten Einheit wechselwirken können. Alternativ oder zusätzlich kann die bzw. eine zweite Einheit auf der gleichen Seite der Tür wie die die erste Einheit aufweisende Handhabe vorgesehen sein. In der Regel wird man auf beiden Seiten der Tür eine jeweilige zweite Einheit vorsehen, dies ist aber nicht zwingend.

Das Identmedium bzw. der Transponder kann als Daten- oder Chipkarte, beispielsweise eine sog. SmartCard, ausgeführt sein. Eine andere Möglichkeit ist, dass das Identmedium bzw. der Transponder in ein elektronisches Gerät integriert ist, beispielsweise ein Mobilfunkgerät oder ein Handheld-Computer.

Die Erfindung in ihren verschiedenen Aspekten wird im Folgenden anhand von in den Figuren gezeigten Ausführungsbeispielen näher erläutert.
- Fig. 1: zeigt schematisch ein die Erfindung exemplarisch verwirklichendes Schließsystem mit einem tragbaren Identmedium, einer Schließeinheit und einer zwischen dem Identmedium und der Schließeinheit vermittelnden Vermittlungseinheit, jeweils schematisch in Form von Blockdiagrammen dargestellt.
- Fig. 2: zeigt ein schematisches Blockdiagramm der Vermittlungseinheit.
- Fig. 3: zeigt eine mögliche Realisierung einer Luftschnittstellen- Einrich- tung mit zugehörigen Komponenten der Vermittlungseinheit gemäß einer ersten Ausführungsvariante.
- Fig. 4: zeigt eine mögliche Realisierung einer Luftschnittstellen- Einrichtung mit zugehörigen Komponenten der Vermittlungseinheit gemäß einer zweiten Ausführungsvariante.

Die Erfindung stellt ein System zur Identitätsfeststellung oder Berechtigungsfeststellung und Ermöglichen bzw. Verhindern eines physikalischen Zugangs zu einer Zieleinrichtung bereit. Fig. 1 und Fig. 2 zeigen schematisch ein Beispiel für eine Konkretisierung dieses Systems als Schließsystem, das mit den Fig. 3 und 4 gezeigten Ausführungsvarianten zugleich auch eine Lese-Einheit exemplarisch ausführt.

Fig. 1 zeigt ein Schließsystem 10 mit einer Schließeinheit 12, die zweckmäßig in einen sog. digitalen oder elektronischen Schließzylinder integriert sein kann. Ein Prozessor 14 mit einem internen RAM- oder/und ROM-Bereich 16 ist bidirektional mit einer Sende- und Empfangselektronik 16 verbunden, an der eine Antennenanordnung 18 angeschlossen ist. Die Sende- und Empfangselektronik 16 in Kombination mit der Antenne 18 bildet eine Luftschnittstelle für die drahtlose Kommunikation beispielsweise mittels eines Wechsel-Magnetfelds, beispielsweise im Längstwellen-, Langwellen- oder Mittelwellen-Frequenzbereich. Das Wechsel-Magnetfeld hat vorzugsweise eine Reichweite von etwa bis zu 1.5 m und besonders bevorzugt von etwa ca. 5 m oder mehr. Die Luftschnittstelle 16, 18 ist dafür vorgesehen, eine Datenkommunikation mit der Luftschnittstelle eines der Schließeinheit 12 zugeordneten Identmediums durchzuführen, beispielsweise eines tragbaren Identmediums entsprechend DE 103 41 370 A1 oder eines stationären Identmediums entsprechend DE 20 2006 859 U1. Bevorzugt weist der Prozessor 14 eine softwaremäßig und/oder hardwaremäßig realisierte Authentifizierungsfunktionalität auf, um im Zusammenwirken mit einer Authentisierungsfunktionalität eines entsprechenden Prozessors des Identmediums das Identmedium verifiziert als berechtigt identifizieren zu können. Zweckmäßig kann eine Challenge-Response-Authentifizierung mittels einer entsprechenden Challenge-Response-Kommunikation zwischen dem Prozessor 14 der Schließeinheit und dem Prozessor des Identmediums über die Luftschnittstelle durchgeführt werden. Die Authentisierung des Identmediums gegenüber der Schließeinheit kann selbst auf einer Authentifizierung auf Seiten des Identmediums beruhen. Beispielsweise kann das Identmedium dafür ausgeführt sein, dass ein Benutzer seine Berechtigung durch die Eingabe eines PIN-Codes oder eines biometrischen Merkmals, beispielsweise eines Fingerabdrucks, mittels eines Biometrie-Sensors, ggf. Fingerabdruck-Sensors, des Identmediums nachweisen muss, bevor das Identmedium sich bzw. den das Identmedium benutzenden Benutzer der Schließeinheit über die Luftschnittstelle als berechtigt identifiziert, etwa über die angesprochene Challenge-Response-Kommunikation. Derartige Schließeinheiten und derartige Identmedien sind Stand der Technik und es wird auf verschiedene Transponder, PIN-Code-Tastaturen, digitale Schließzylinder und sonstige Produkte der Anmelderin verwiesen.

Im Falle eines digitalen Schließzylinders weist die darin integrierte Schließeinheit 12 einen Aktor 20 auf, der im Falle der Identifizierung eines Identmediums bzw. dessen Benutzers als berechtigt durch den Prozessor 14 für die Entsperrung einer Schließmechanik auslösbar ist, so dass beispielsweise der Benutzer nun durch Betätigung einer Handhabe des Schließzylinders eine Tür aufschließen und öffnen kann. Beispielsweise kann der Aktor als Magnet bzw. Hubmagnet oder Motor ausgeführt sein. In anderen Zusammenhängen sind aber auch andere Aktoren denkbar, beispielsweise eine Schaltung, ein Prozessor und ein Softwareprogramm. Eine mechanische Entsperrung ist also nicht zwingend. Die verschiedenen Komponenten der Schließeinheit werden durch eine Batterie-Energieversorgung 22 mit elektrischer Energie versorgt. Je nach Anwendungssituation kommt aber auch eine Energieversorgung aus dem Netz in Betracht.

Auch wird daran gedacht, dass die Schließeinheit 12 mit Identmedien, insbesondere Transpondern, wie angesprochen zusammenwirken kann. Es ist aber vorgesehen, dass auch andersartige Identmedien mit einer Schlüsselfunktion in Bezug auf die Schließeinheit 12 ausgestattet sind oder werden, die direkt nicht über die Luftschnittstelle 16, 18 mit dem Prozessor 14 der Schließeinheit kommunizieren können, sei es, weil eine andere Datenübertragungstechnik oder ein anderes Datenübertragungsprotokoll für solche andersartigen Identmedien realisiert ist, sei es, dass eine Reichweite einer Luftschnittstelle eines solchen andersartigen Identmediums nicht ausreicht, eine Datenkommunikation zwischen der Schließeinheit und dem Identmedium direkt zu ermöglichen. Es wird insoweit an Identmedien mit sehr kurzreichweitiger, auf Nahfeldern basierender Luftschnittstelle gedacht, deren Reichweite u.U. nur wenige Zentimeter beträgt. Im Falle eines digitalen Schließzylinders könnte die Reichweite zu kurz sein, um von dem auf der einen Türseite von einem Benutzer gehaltenen oder getragenen Identmedium die u.U. in einer Handhabe des Schließzylinders auf der anderen Türseite integrierte Schließeinheit zu erreichen, so dass es insoweit nichts bringen würde, die Schließeinheit mit einer zu der Luftschnittstelle des Identmediums passenden Luftschnittstelle auszustatten.

Ein Beispiel für ein entsprechendes Identmedium ist ein beispielsweise in Kartenform ausgeführter passiver RFID-Transponder, etwa nach dem ISO 14444A/Mifare- oder FeliCa-Standard, dessen Luftschnittstelle für eine induktive Nahfeld-Wechselwirkung bei 13,56 MHz ausgelegt ist, wobei die die Komponenten des Transponders versorgende elektrische Energie dem von einer zugeordneten Lese-Einheit erzeugten induktiven Nah-Wechselfeld genommen wird. Ein entsprechender Transponder ist in Fig. 1 mit 50 bezeichnet und weist eine Antennenanordnung 52 und eine Empfangs- und Sende-Elektronik 54 auf. Die Sende- und Empfangs-Elektronik 54 stellt einerseits den übrigen Komponenten des Transponders die aus dem Wechselfeld entnommene, gleichgerichtete elektrische Energie zur Verfügung und ist andererseits bidirektional mit einem Prozessor 56 verbunden, der aus einem Speicherbereich 58 zumindest Daten auslesen kann und ggf. auch Daten in den Speicherbereich 58 schreiben kann. Für die dem Schließsystem der Fig. 1 zugrundeliegende spezielle Anwendung sind in den Speicherbereich 58 auch als Identifizierungsdaten bezeichenbare Schlüsseldaten aufgenommen oder in diesen einschreibbar, um unter Vermittlung einer als RFID-Lese-Einheit ausgeführten Vermittlungseinheit 100 eine Zugangsberechtigung gegenüber der Schließeinheit auf drahtlosem Wege nachzuweisen. Das Identmedium 50 kann ferner auch mit einem Biometriesensor oder einer PIN-Code-Eingabemöglichkeit ausgestattet sein, um eine höhere Sicherheit gegen Missbrauch zu geben.

Die Lese-Einheit 100 bzw. die eine Lese-Funktion erfüllende Vermittlungseinheit 100 weist eine zu der Luftschnittstelle 52, 54 komplimentäre Luftschnittstelle 102, 104 und 106 auf, wobei 102 eine Antennenanordnung, 104 eine die Antenne 102 treibende Analogschaltungsanordnung und 106 eine mit der Analogschaltungsanordnung bidirektional verbundene Transceiverschaltung, beispielsweise ein Universal Asynchronous Receiver Transmitter (UART) bezeichnet. In der Sende- und Empfangselektronik 54 des Transponders 50 sind die Funktionen einer komplementären Analogschaltung und einer komplementären Transceiverschaltung integriert.

Die Analogschaltung 104 ist dafür ausgeführt, ein quarzstabilisiertes elektrisches Wechselfeld zu erzeugen, welches die Antennenanordnung 102 treibt. Beispielsweise durch eine Lastmodulation können Daten zu dem Transponder 50 übertragen werden. Die Sende-oder Empfangselektronik 54 des Transponders kann ebenfalls Daten in Richtung zur Lese-Einheit übertragen, beispielsweise ebenfalls durch eine Lastmodulation.

Der Transceiver 106 empfängt zu dem Transponder zu übertragene Daten von einem Prozessor 108 und führt vom Transponder 50 empfangene Daten dem Prozessor 108 zu. Der Prozessor 108 kann verschiedene Komponenten integriert haben, die ohne Weiteres auch gesondert vom Prozessor angeordnet sein könnten, beispielsweise Speicherbereiche, Interrupt-Timer, Zähler und A/D-Wandler oder dgl., wie in Fig. 2 durch bidirektional verbundene Blöcke in dem den Prozessor 108 repräsentierenden Block angedeutet.

Mit dem Prozessor 108 ist für die Vermittlungsfunktion der Vermittlungseinheit 100 eine Sende- und Empfangselektronik 110 bidirektional verbunden, an der eine Antennenanordnung 112 angeschlossen ist. Die Sende- und Empfangselektronik 110 und die Antennenanordnung 112 bildet eine Luftschnittstelle, die zur Luftschnittstelle 20, 22 der Schließeinheit 12 komplimentär ist. Mittels der Luftschnittstelle 102, 104, 106 der Vermittlungsstelle 100 und der Luftschnittstelle 52, 54 des Identmediums 50 aus diesem ausgelesene bzw. zur Vermittlungseinheit übertragene Identdaten, so insbesondere aus dem Speicherbereich 58 des Identmediums 50 stammende Identdaten, werden vom Prozessor 108 in der erhaltenen Form oder weiterverarbeitet vermittels der Luftschnittstelle 110, 112 zu der Schließeinheit 12 übertragen, die diese Daten vermittels der Luftschnittstelle 16, 18 empfängt und vermittels des Prozessors 18 auswertet. Eine andere Möglichkeit ist, dass der Prozessor 108 der Vermittlungseinheit 100 die vom Indentmedium 50 empfangenen Identdaten auswertet und dann im Falle einer positiven Feststellung einer Identität oder Berechtigung von den vom Identmedium 50 erhaltenen Identdaten abstrahierte Identdaten vermittels der Luftschnittsstelle 110, 112 zur Schließeinheit 12 überträgt, die diese Daten vermittels der Luftschnittsstelle 16, 18 empfängt und vermittels des Prozessors 14 auswertet. Es könnte also beispielsweise der Schließeinheit gewissermaßen nur die Information gegeben werden, dass eine Zugangsberechtigung vorliegt. Es bestehen hier viele Möglichkeiten für die Realisierung im Detail. Im einfachsten Fall reicht die Übertragung eines bestimmten Identifizierungsdatensatzes vom Identmedium 50 über die Vermittlungseinheit 100 zur Schließeinheit 12, damit der Prozessor 14 den Aktor 20 im Sinne der Freigabe eines Zugangs bzw. des Entsperrens einer Schließung ansteuert. Bevorzugt wird allerdings durch den Prozessor 14 der Schließeinheit 12 eine Authentifizierung etwa auf Grundlage eines Challenge-Response-Datendialogs durchgeführt, wobei vor allem daran gedacht wird, dass die entsprechende Authentisierung entweder der Prozessor 108 der Vermittlungseinheit 100 oder der Prozessor 56 des Identmediums 50 durchführt. In letzterem Falle würde die Vermittlungseinheit 100 in der Tat nur als Einrichtung zur Vermittlung der Datenübertragung zwischen dem Identmedium 50 und der Schließeinheit 12 dienen. Eine Authentifizierung auf Seiten der Vermittlungseinheit 100 durch deren Prozessor 108 in Verbindung mit einer von dem Prozessor 56 des Identmediums 50 durchgeführten Authentisierung ist zusätzlich oder alternativ ebenfalls denkbar. So oder so erfüllen das Identmedium 50 in Kombination mit der Vermittlungseinheit 100 in einer funktionellen Betrachtung im Wesentlichen diejenigen Funktionen, die ein herkömmlicher, direkt auf die Schließeinheit bezogener und eine zur Luftschnittstelle 16, 18 komplimentäre Luftschnittstelle aufweisender Transponder erfüllt.

Bevorzugt ist die Vermittlungseinheit 100 mit einer Energieversorgung 120 auf Batterie- oder Akkubasis, vorzugsweise auf Batteriebasis mit einer Batterieanordnung sehr großer Kapazität ausgestattet, um eine entsprechende Vermittlungseinheit oder mehrere entsprechende Vermittlungseinheiten ohne großen Installationsaufwand, und ohne Erfordernis des Vorhandenseins eines Netzanschlusses oder der Notwendigkeit, Energieversorgungskabel zu verlegen, in Nachbarschaft zu einer Schließeinheit 10 bzw. einer jeweiligen Schließeinheit 10 platziert werden zu können. Hieraus ergibt sich aber folgendes, der Realisierung der Vermittlungseinheit mit einer Batterie-Energieversorgung an sich entgegen stehendes Problem: Herkömmliche RFID-basierte Lese-Einheiten (insbesondere Karten-Leser) bauen ein permanentes elektrisches bzw. magnetisches bzw. elektromagnetisches Nahfeld (häufig 125 kHz oder 13,56 MHz) auf, so dass RFID-Karten bzw. Passivtransponder, die in dieses Nahfeld gebracht werden, sich aus diesem Feld speisen können, um mittels der so gewonnenen elektrischen Energie eine Kommunikation mit der Lese-Einheit aufbauen zu können, beispielsweise um Identdaten auszutauschen. Für den permanenten Erhalt eines solchen Nahfelds wird allerdings relativ viel Energie benötigt, was in der Praxis eine externe Energieversorgung mit entsprechend erhöhtem Installationsaufwand zwingend macht. Demgegenüber wird bei der Vermittlungseinheit 100 erfindungsgemäß eine im zeitlichen Mittel deutlich reduzierte Leistungsaufnahme realisiert, indem die Vermittlungseinheit selbsttätig zwischen verschiedenen Betriebszuständen umschaltet, zu denen ein Ruhe-Betriebszustand gehört, in dem der elektrische Energieverbrauch der Überwachungseinheit deutlich reduziert ist. In dem Ruhe-Betriebszustand können alle Komponenten der Überwachungseinheit 100 deaktiviert sein, mit Ausnahme einer Funktionalität, die ein selbsttätiges Umschalten der Überwachungseinheit aus dem Ruhe-Betriebszustand in wenigstens einen anderen Betriebszustand, beispielsweise auf Basis eines Interrupts oder eines Zählerstands eines internen Zählers des Prozessors 108 ermöglicht.

Es versteht sich, dass in dem Ruhe-Betriebszustand die der Schließeinheit 12 zugeordnete Luftschnittstelle 110, 112 idealerweise ausgeschaltet ist und dementsprechend keine elektrische Energie verbraucht. Man kann vorsehen, dass die Luftschnittstelle 110, 112 nur in einem solchen Betriebszustand der Vermittlungseinheit eingeschaltet ist, wenn die Vermittlungseinheit 100 über die Luftschnittstellen 102, 104, 106 und 52, 54 mit einem Identmedium 50 in Verbindung steht und Identdaten bzw. Authentifizierungsdaten bzw. Berechtigungsdaten zur Schließeinheit 12 zu übertragen sind. Selbstverständlich kann es aber auch noch andere Betriebszustände geben, in denen eine Datenkommunikation zwischen der Vermittlungseinheit 100 und der Schließeinheit 12 ermöglicht, also die Luftschnittstelle 11, 112 eingeschaltet ist.

Ein erster Ansatz zur Reduzierung der Probeaufnahme bzw. Leistungsaufnahme der Lese-Einheit 100 beruht auf einem Polling-Verfahren. Die Lese-Einheit 100 verbringt nach diesem Ansatz die meiste Zeit in einem "Schlafmodus", dem schon angesprochenen Ruhe-Betriebszustand, in dem nur sehr wenig Energie verbraucht wird. Die Lese-Einheit wacht in zeitlichen Abständen wiederholt, beispielsweise periodisch (z. B. etwa 1 Mal pro Sekunde) aus dem "Schlafmodus" auf, um festzustellen, ob sich ein Transponder in der näheren Umgebung, nämlich dem Nahfeldbereich, befindet. Hierzu wird das elektrische bzw. magnetische bzw. elektromagnetische Wechselfeld mittels der Luftschnittstelle 102, 104, 106 vollständig aufgebaut, um dann über die Luftschnittstelle die induktive bzw. kapazitive bzw. elektromagnetische Ankopplung des Transponders zu detektieren, beispielsweise über eine detektivierbare Dämpfung des Feldes, die von der analogen Schaltungsanordnung 104 als Last wahrnehmbar ist.

Wird kein Transponder im Nahfeldbereich detektiert, so kehrt die Lese-Einheit 100 selbsttätig in den Ruhe-Betriebszustand zurück, um dann später (beispielsweise nach 1 Sekunde) selbsttätig wieder die Luftschnittstelle 102, 104, 106 zu aktivieren und erneut zu überprüfen, ob ein Transponder im Nahfeldbereich vorhanden ist. Gemäß dieser Betriebsweise der Lese-Einheit 100 wird die Luftschnittstelle 102, 104, 106 für das Polling in zeitlichen Abständen wiederholt an und ausgeschaltet. Die beschriebene Art der Ausführung des Pollings hat allerdings den Nachteil, dass die Luftschnittstelle 102, 104, 106 auch hinsichtlich von Bestandteilen eingeschaltet wird, die für die reine Kartendetektion, etwa über die detektierbare Last eines angekoppelten Transponders, nicht erforderlich sind, sondern der Datenkommunikation mit dem angekoppelten Transponder dienen. Für die Detektion eines angekoppelten Transponders über den Energieverlust des Wechselfeldes reicht es aber aus, ein solches Wechselfeld definiert zu erzeugen und die Dämpfung des Feldes bzw. die von dem Transponder durch die Ankoppelung an das Wechselfeld verursachte Last zu detektieren.

Dementsprechend ist bei einer ersten, auf Basis von Fig. 3 in Verbindung mit Fig. 2 zu erläuternden Ausführungsvariante die Lese-Einheit 100 mit einer eigenen, nur für die Transponderdetektion dienenden Luftschnittstelle ausgeführt, die von einer Überwachungseinrichtung 200 zusammen mit der Antennenanordnung 102 gebildet ist. Ohne Beschränkung der Allgemeinheit kann zweckmäßig die Antennenanordnung 102 sowohl zur Luftschnittstelle 102, 104, 106 als auch zur Luftschnittstelle 200, 102 gehören, und es können Schalter vorgesehen sein, die für einen Daten-Kommunikations-Betriebszustand die Antennenanordnung 102 der analogen Schaltung 104 zuschaltet und für einen Überwachungs-Betriebszustand die Antenne 102 der Überwachungseinrichtung 200 zuschaltet. Anstelle einer Schalteranordnung kann auch eine andersartige Isolationsanordnung, beispielsweise auf Basis von Dioden, insbesondere PIN-Dioden, realisiert sein. Selbstverständlich könnte die Überwachungseinrichtung 200 auch mit einer eigenen Antennenanordnung ausgestattet sein, und es ist zwar zweckmäßig, aber nicht zwingend, dass die Luftschnittstelle 102, 104 und 106 einerseits, und die Luftschnittstelle 200, 102 bzw. 200 mit zugehöriger eigener Antennenanordnung ein Wechselfeld bei der gleichen Frequenz erzeugen, das der jeweilige Transponder ankoppeln und Energie aus dem Feld beziehen kann.

Mit der Überwachungseinrichtung 200 ist ein Polling derart möglich, dass nicht die der Datenkommunikation dienende Luftschnittstelle 102, 104, 106 angeschaltet wird, um über die Ankopplung eines im Nahfeldbereich befindlichen Transponders dessen Vorhandensein zu detektieren, sondern die Luftschnittstelle 200, 102 angeschaltet wird, um über das Ankoppeln eines im Nahfeldbereich befindlichen Transponders dessen Vorhandensein zu detektieren. Die Lese-Einheit 100 schaltet deswegen in zeitlichen Abständen wiederholt zwischen dem Ruhebetriebs-Zustand, in dem beide Luftschnittstellen ausgeschaltet sind und dem Überwachungs-Betriebszustand, in dem die Luftschnittstelle 200, 102 angeschaltet ist, die der Datenkommunikation dienende Luftschnittstelle 102, 104, 106 aber ausgeschaltet ist, um. Der Prozessor 108 ist dabei so ausgeführt oder programmiert, dass er auf die Detektion eines das Vorhandensein eines Transponders im Nahfeldbereich indizierenden Energieverlusts, genauer auf eine einen solchen Energieverlust indizierende, von der Überwachungseinrichtung 200 über die Anschlüsse der Antennenanordnung 102 gesehene Last die Luftschnittstelle 102, 104, 106 anschaltet und die standardmäßige Datenkommunikation zwischen dem Transponder 50 und der Lese-Einheit 100 ermöglicht. Vor der Aufnahme einer Datenkommunikation, etwa zur Identifizierung oder Authentifizierung, kann ein zusätzlicher Überprüfungsschritt vorgesehen sein, um zu überprüfen, ob der der detektierten Last bzw. Lasterhöhung zugrunde liegende Energieverlust des Wechselfeldes tatsächlich auf einen Transponder 50 zurückzuführen ist, mit dem eine Datenkommunikation stattfinden kann.

Fig. 3 zeigt eine mögliche Ausgestaltung der Antennenanordnung 102 in Kombination mit der Überwachungseinrichtung 200 und einer beispielsweise durch einen Baustein realisierten Funktionsgruppe 105, die im Wesentlichen die Analogschaltung 104 und den Transceiver 106 enthält, und beispielsweise auf Basis eines Philips/NXP-Bausteins PN531 oder PN511 realisiert sein kann. Vorteilhaft könnte auch z. B. ein Philips/NXP-Modul PN65K zum Einsatz kommen, welches einen NFC-Controller PN531 in Kombination mit einem "Secure Smart Card" Controller aufweist, was beispielsweise für Realisierungen eines Mobiltelefons als Transponder zweckmäßig sein kann.

Die Überwachungseinrichtung 200 weist als zentralen Bestandteil einen Leistungsverstärker 202 auf, der an seinen beiden Eingängen um 180° Phasenunterschied versetzt durch das Ausgangssignal eines Quarz-Oszillators 204 angesteuert wird und über Koppel-Kondensatoren 206, 208 und Schalter 210, 212 einer als die Antennenanordnung 102 dienenden PCB-Antenne mit einem elektrischen Wechselfeld treibt, um das Wechselfeld für die Transponder-Erfassung, also ein "Überwachungs-Wechselfeld" zu erzeugen. Die Überwachungseinrichtung 200 ist dann angeschaltet, wenn der Prozessor 108 einen Pegel 1 an einem Ausgang A_det ausgibt, wodurch ein von diesem Steuersignal angesteuerter Leistungsschalter 214 geschlossen wird, so dass der Leistungsverstärker 202 sowie auch der Quarz-Oszillator 204 Betriebsspannung erhalten. Das Steuersignal A_det wird auch den Schaltern 210, 212 zugeführt, um diese in einen Schaltzustand zu schalten, in dem die Antenne 102 über die Kondensatoren 206, 208 an den Ausgängen des Leistungsverstärkers 202 angeschlossen ist und die von diesem gelieferte elektrische Schwingung eingekoppelt erhält. Über eine Pegelanpassung 218 wird ein die Amplitude der elektrischen Schwingung in der PCB-Antenne 102 repräsentierendes Spannungssignal einem Eingang ADC_in des Prozessors 108 zugeführt. Auf Basis der definierten Anregung der PCB-Antenne 102 durch die vom Verstärker 202 und dem Oszillator 204 gebildeten Treiberschaltung kann aus diesem, mittels eines A/D-Wandlers in einen Digitalwert umgesetzten Spannungssignal ein Energieverlust des erzeugten Wechselfelds als wirksame Last detektiert werden. Übersteigt diese Last einen Schwellenwert, so deutet dies auf die Ankopplung eines Transponders an das erzeugte Überwachungs-Wechselfeld hin, so dass nun durch Umschalten des Ausgangs A_det auf den Pegel 0 und Umschalten eines Ausgangs Trsc.-Enable des Prozessors 108 auf den Pegel 1 der Transceiver 105 angeschaltet wird, um nun die Luftschnittstelle 104, 106 in Verbindung mit der Antennenanordnung 102 anzuschalten. Die Ausgabe des Pegels 0 am Ausgang A_det führt dazu, dass die Schalter 210, 212 in einen zweiten Schaltzustand umgeschaltet werden, in dem die PCB-Antenne 102 über Kondensatoren 230, 232 und weitere, einer üblichen Beschaltung einer solchen Transceiver-Funktionsgruppe entsprechende Komponenten an Anschlüssen Rx, Tx+, Tx- und VMID des Transceivers 105 angeschlossen ist. Die Anschlüsse Tx+ und Tx- werden im Falle der schon angesprochenen Module PN511 und PN531 auch als TX1 und TX2 bezeichnet. An diesen Anschlüssen wird das lastmodulierte 13,56 MHz Schwingungssignal geliefert, das die PCB-Antenne 102 speist und mittels dieser das Wechselfeld erzeugt. Der Anschluss Rx bzw. RX empfängt das lastmodulierte 13,56 MHz Schwingungssignal von der Antennenanordnung 102. Am Anschluss VMID wird eine interne Referenzspannung ausgegeben. Es wird auf entsprechende Produktinformationen zu den angesprochenen Transceiver-Modulen verwiesen.

Ist die Luftschnittstelle 102, 104, 106 bzw. 102, 105 angeschaltet, so arbeitet die Lese-Einheit 100 genauso wie herkömmliche Lese-Einheiten, insbesondere RFID-basierte Kartenleser, die ein permanentes elektromagnetisches Nahfeld bzw. Wechselfeld erzeugen.

Gemäß der Ausführungsvariante von Fig. 3 in Kombination mit Fig. 2 wird für die Transponder-Detektion das elektromagnetische Nahfeld bzw. Wechselfeld vollständig aufgebaut und die Transponder-Detektion beruht auf der Ankopplung des Transponders derart, dass dieser Energie aus dem Wechselfeld entnimmt, was als Lastzunahme detektierbar ist. Der so realisierte, die Luftschnittstelle 200, 102 benutzende Überwachungszustand kann deswegen ebenso wie der Datenkommunikation dienende, die Luftschnittstelle 102, 104, 106 benutzende Kommunikations-Betriebszustand der Lese-Einheit 100 bzw. der Vermittlungseinheit 100 als Kopplungs-Betriebszustand identifiziert werden, in dem die oder eine Luftschnittstelle eingeschaltet ist, so dass ein im Nahfeldbereich befindlicher Transponder induktiv bzw. kapazitiv bzw. elektromagnetisch an diese ankoppeln kann. Zur Transponder-Detektion wird nach Umschalten in den Überwachungs-Betriebszustand zuerst der Quarz-Oszillator aktiviert, dessen Schwingung dann verstärkt und an die PCB-Antenne angelegt. Damit eine insbesondere induktive Kopplung zwischen der Antennenanordnung 102 und einem im Nahfeldbereich befindlichen Transponder möglich ist, insbesondere der Transponder mit Energie aus dem elektrischen Feld versorgt werden kann und dementsprechend ein Spannungsrückgang auf der PCB-Antenne entsprechend der resultierenden Last (Eddy-Strom) detektierbar ist, muss ein relativ starkes Wechselfeld erzeugt werden. Auch die Schwingungserzeugung mittels Quarz-Oszillator und Verstärkung dieser Schwingung mittels des Leistungsverstärkers 202 verbraucht vergleichsweise viel elektrische Energie.

Gegenüber der Überwachungseinrichtung 200 von Fig. 3 ist dementsprechend eine andere Art der Überwachung des Umgebungsbereichs der Lese-Einheit bevorzugt, die nicht auf der Ankopplung eines Transponders an ein Wechselfeld mit Energieentnahme aus dem Wechselfeld durch den Transponder beruht.

Fig. 4 zeigt in Verbindung mit Fig. 2 eine entsprechende Ausführungsvariante, bei der anstelle der Überwachungseinrichtung 200 eine Überwachungseinrichtung 200' realisiert ist, deren Bezugszeichen in Fig. 2 in Klammern als Alternative zum Bezugszeichen 200 angegeben ist.

Die bei der Ausführungsvariante gemäß Fig. 4 realisierte Transponderdetektion beruht nicht auf der Dämpfung einer ein Wechselfeld erzeugenden elektrischen Schwingung durch einen an das Wechselfeld angekoppelten Transponder, sondern auf der Verstimmung der ein Wechselfeld erzeugenden elektrischen Schwingung in Folge einer durch das Zuführen eines Transponders in die Umgebung der Lese-Einheit hervorgerufenen elektrischen oder magnetischen oder elektromagnetischen Änderung in der Umgebung bzw. in Folge einer elektrischen oder magnetischen oder elektromagnetischen Rückwirkung des zugeführten Transponders. Die elektrische Schwingung wird durch einen frei schwingenden, nicht quarzstabilisierten Oszillator erzeugt und es kommt über das von einer Antenne oder allgemein einer Felderzeugungsanordnung erzeugte Nahfeld zu einer Wechselwirkung mit der Umgebung bzw. dem Transponder, so dass die elektrischen oder/und magnetischen oder/und elektromagnetischen Eigenschaften des Transponders und dessen Materialien und Komponenten, ggf. speziell auch ein zur Schwingung anregbarer elektrischer Schwingkreis oder/und eine Induktivität des Transponders, auf die Schwingung rückwirken und so eine Frequenzänderung der elektrischen Schwingung bewirken können.

So hängt die Induktivität etwa einer Leiterschleife von der relativen Permeabilität µᵣ des vom magnetischen Fluss des magnetischen Wechselfelds durchfluteten Raumes ab. Führt man ein Material anderer relativer Permeabilität in den durchfluteten Raum zu, so resultiert aus der in Folge auftretenden Änderung der Induktivität einer Leiterschleife oder einer Spulen- oder Leiterschleifen-Anordnung die Änderung einer Resonanzfrequenz und damit Schwingfrequenz eines die Induktivität als Frequenz-beeinflussendes oder Frequenz-bestimmendes Bauteil enthaltenden Schwingkreises. In entsprechender Weise kann in einem solchen Schwingkreis eine frequenzbeeinflussende oder frequenzbestimmende Kapazität durch Änderungen elektrischer Eigenschaften der Umgebung geändert werden, was über eine Änderung der Resonanz-Frequenz eine Änderung der Schwingungsfrequenz bewirken kann. Relevant ist hierbei die Polarisierbarkeit eines vom Feld durchfluteten Dielektrikums, die typischerweise durch die relative Dielektrizitätskonstante εᵣ beschrieben wird. Je nach Art des für die Transponderdetektion verwendeten Wechselfelds (im Folgenden auch als Sensor-Wechselfeld bezeichnet) können die Permeabilitätseigenschaften oder/und die die Dielektrizitätseigenschaften der Umgebung und eines in diese zuzuführenden, also in die Nähe der Lese- bzw. Vermittlungseinheit zubringenden Transponders relevant sein.

Ein besonders wirkungsvoller Mechanismus für die Transponderdetektion beruht demgegenüber auf einer Wechselwirkung eines Schwingkreises des Transponders oder einer Induktivität des Transponders, insbesondere einer Induktivität eines Schwingkreises des Transponders, mit dem frei schwingenden Oszillator, der mittels der Antenne bzw. Felderzeugungsanordnung das Sensor-Wechselfeld erzeugt. Zwar könnte man das Vorhandensein bzw. Nicht-Vorhandensein eines solchen Schwingkreises bzw. einer solcher Induktivität eines Transponders im Umgebungsbereich ebenfalls allgemein als elektrische bzw. magnetische bzw. elektromagnetische Eigenschaft der Umgebung bzw. des in diese zugeführten Transponders auffassen. Es tritt aber eine Wechselwirkung bzw. Rückwirkung auf den Oszillator bzw. Schwingkreis einer die Transponderdetektion durchführenden Überwachungseinrichtung in der Art einer Wechselwirkung zwischen gekoppelten Oszillatoren (Schwingkreisen) bzw. gekoppelten Induktivitäten auf, die einen besonders starken Effekt in Bezug auf die dem Sensor-Wechselfeld zugrunde liegenden elektrische Schwingung ergibt und so wirkungsvoll für die Transponderdetektion ausgenutzt werden kann. Insbesondere lässt sich so auch eine besonders hohe Selektivität für das Ansprechen der Überwachungseinrichtung auf einen zugeführten Transponder erreichen.

Auf Grundlage der angesprochenen Mechanismen führt die Präsenz eines RFID-basierten Transponders im Nahfeld einer Antennenanordnung, die durch einen frei schwingenden Oszillator angeregt wird, zu einer signifikanten Frequenzänderung des Oszillators. Die Frequenzänderung ist insbesondere dann besonders groß und einfach zu detektieren, wenn die Schwingfrequenz des Oszillators ungefähr resonant zu einem Schwingkreis des Transponders ist, da dann in dem Schwingkreis des Transponders eine elektrische Schwingung angeregt wird, die auf den Schwingkreis der Lese-Einheit rückwirkt und ebenfalls die Schwingfrequenz des frei schwingenden Oszillators beeinflusst.

Nach dem der Ausführungsvariante der Fig. 4 zugrunde liegenden Ansatz wird eine die Antennenanordnung 102 als frequenzbestimmendes oder frequenzbeeinflussendes Element enthaltende Oszillator-Schaltung verwendet, beispielsweise eine kapazitive oder induktive Dreipunktschaltung. Besonders zweckmäßig im hier behandelten Kontext ist eine kapazitive Dreipunktschaltung, die bei der Überwachungseinrichtung 200' der Fig. 4 als sog. Colpitts-Oszillator realisiert ist. Es handelt sich um einen kapazitiv rückgekoppelten Dreipunkt-LC-Oszillator mit Parallelschwingkreis, der im Falle der Fig. 4 als Emitter-Schaltung realisiert ist. Eine solche Schaltung kann mit einfachen Mitteln aufgebaut werden und arbeitet sehr zuverlässig.

Der für einen Schwingungsfrequenzbereich bei beispielsweise 13,56 MHz geeignete Transistor 250 empfängt an seinem von dem Kollektor und der Basis gebildeten Eingang das Schwingungs-Rückkopplungssignal von der PCB-Antenne 102, wenn die Schalter 210 und 212 in Folge eines Pegels 1 vom Ausgang A_det des Prozessors 108 in der die PCB-Antenne der Überwachungseinrichtung 200' zuschaltenden Schaltstellung sind. Das Pegelsignal 1 vom Ausgang A_det ist hinsichtlich Spannung und von einer Treiberschaltung des Prozessors 108 ziehbarem Strom so bemessen, dass es als Versorgungsspannung für den Colpitts-Oszillator 252 reicht, der über eine Drossel 256 die Versorgungsspannung am Kollektor bezogen auf die über einen Widerstand 254 zur Stabilisierung des Transistor-Arbeitspunkts am Emitter angelegte Masse empfängt. Der Arbeitspunkt ist über einen Spannungsteiler mit Widerständen 256, 258 bestimmt, die die an der Basis angelegte Arbeitspunkts-Vorspannung bestimmen.

Die Emitterschaltung erzeugt eine Phasendrehung von 180°. Um das Rückkopplungssignal phasengleich dem Eingang zuzuführen und eine selbsttätig startende und sich selbsttätig erhaltende Schwingung zu erreichen, ist eine zusätzliche Phasendrehung von nochmals 180° erforderlich. Diese wird durch den kapazitiven Dreipunkt bestehend aus zwei Kapazitäten 260, 262 und einer Induktivität 264 der PCB-Antenne 102 erreicht. Ein Abgreifpunkt zwischen den beiden Kapazitäten ist auf Masse gelegt, so dass über die gemeinsame Masse eine Verbindung zum Emitter hergestellt ist.

Die Induktivität 264 bildet zusammen mit der Reihenschaltung der Kapazitäten 260, 262 einen Parallel-Schwingkreis, der den frequenzbestimmenden Schwingkreis des Colpitts-Oszillators 252 darstellt. Das Verhältnis der Kapazitäten 260, 262 bestimmt einen Koppelfaktor. Die bereits angesprochenen Kondensatoren 206, 208 trennen den Schwingkreis galvanisch von dem Transistor. Der zum Stabilisierungswiderstand 254 parallel geschaltete Kondensator 266 hebt für das Oszillatorsignal die Gegenkopplung auf, da er für die elektrische Schwingung den Widerstand 254 durch seinen geringen kapazitiven Widerstand überbrückt. Der Kondensator 268 schafft eine kapazitive Verbindung der Betriebsspannung zum gemeinsamen Massepotential, was für eine einwandfreie Funktion der Oszillatorschaltung zweckmäßig ist.

Ist die Überwachungseinrichtung 200' im Überwachungs-Betriebszustand der Lese-Einheit 100 (ggf. Vermittlungseinheit 100) aktiviert, so schwingt der Colpitts-Oszillator 252. Die elektrische Schwingung erzeugt durch die PCB-Antenne 102 ein auch als Sensor-Wechselfeld bezeichnetes Wechsel-Nahfeld, welches sich in einen Umgebungsbereich (Nahfeldbereich) erstreckt und über die elektrischen bzw. magnetischen bzw. elektromagnetischen Eigenschaften des Umgebungsbereichs auf den Colpitts-Oszillator zurückwirkt und dessen Schwingfrequenz beeinflusst. Die momentane Schwingfrequenz wird durch Zuführung eines die elektrische Schwingung repräsentierenden Spannungssignals über eine Pegelanpassung 218 an einen Zählereingang E_z des Prozessors 108 erfasst. Der Zähler des Prozessors 108 und die Zählerstände auswertende Prozessorfunktionalitäten sind in einer funktionellen Betrachtung als der Überwachungseinrichtung 200' zugehörig anzusehen.

Ein schon angesprochener Mechanismus für die Überwachung des Umgebungsbereichs auf Vorhandensein bzw. Zufuhr eines Transponders beruht darauf, dass die Materialien und Komponenten des Transponders über ihre, insbesondere durch die relative Permeabilitätskonstante bzw. relative Dielektrizitätskonstante beschreibbaren elektrischen und magnetischen und elektromagnetischen Eigenschaften die insgesamt vom erzeugten Wechselfeld "gesehenen" elektrischen bzw. magnetischen bzw. elektromagnetischen Eigenschaften des Umgebungsbereichs beeinflussen und über eine Änderung insbesondere der wirksamen Induktivität des Schwingkreises dessen Resonanzfrequenz beeinflussen und gegenüber einem Zustand ohne Transponder im Umgebungsbereich verschieben.

Ein anderer schon angesprochener Mechanismus, der in einer grundlegenden Betrachtung aber zumindest teilweise ebenfalls auf derartige effektive Änderungen der magnetischen bzw. elektrischen bzw. elektromagnetischen Eigenschaften zurückführbar sein dürfte, ist die Wechselwirkung des die Antenne 102 bildenden Schwingkreises mit einem entsprechenden Schwingkreis eines jeweiligen Transponders. Ist die Resonanzfrequenz des Oszillators 252 ungefähr resonant zum Schwingkreis des Transponders (ggf. eine RFID-Karte), so tritt eine signifikante Frequenzänderung der Schwingfrequenz des Oszillators der Überwachungseinrichtung 200' auf, die einfach detektierbar ist.

In diesem Zusammenhang sei noch angemerkt, dass die Resonanzfrequenz des Schwingkreises des Transponders von den elektrischen (insbesondere dielektrischen) und magnetischen Eigenschaften der Materialien des Transponders selbst abhängt, so dass insoweit vermittels der Wechselwirkung zwischen dem Schwingkreis des Transponders und dem Schwingkreis der Überwachungseinrichtung 200' die Zufuhr eines Transponders in den Umgebungsbereich zu einer auf die Überwachungseinrichtung 200' wirkenden Änderung der elektrischen bzw. magnetischen bzw. elektromagnetischen Eigenschaften des Umgebungsbereichs führt.

Eine jeweils auftretende Frequenzverschiebung des frei schwingenden Oszillators 252 der Überwachungseinrichtung 200' wird bevorzugt auf Grundlage wenigstens einer Überwachungsbedingung und wenigstens einer Referenz-Schwingfrequenz oder/und wenigstens einer Schwellen-Differenzfrequenz ausgewertet, um zu entscheiden, ob die detektierte Frequenzverschiebung auf das Vorhandensein eines Transponders im Umgebungsbereich hinweist oder nicht. Neben der Größe der Frequenzverschiebung (Differenzfrequenz gegenüber einem Zustand zuvor) ist auch die Richtung der Frequenzverschiebung, zu größeren oder zu kleineren Frequenzen, relevant. Entsprechende Referenz- und Schwellenwerte und entsprechende Überwachungsbedingungen können empirisch unter Verwendung eines jeweiligen Transponders ermittelt werden, insbesondere auch nach Platzierung der Lese-Einheit an einer bestimmten Stelle eingelernt werden, da auch die sonstige Umgebung, insbesondere die Materialien von Komponenten und Halterungen der Lese-Einheit, eine Rolle spielen, sowie auch die an der jeweiligen Stelle herrschende Temperatur. Vorteilhaft kann die Überwachungseinrichtung in einem Kalibriermodus der Lese-Einheit selbsttätig kalibriert werden. Es können auch selbsttätig wiederholt auftretende Kalibrierungen vorgesehen sein. Referenzwert kann vorteilhaft ein Vergangenheitswert sein, beispielsweise ein Mittelwert einer definierten Vorperiode, ggf. - um auch auftretende Temperaturänderungen berücksichtigen zu können - etwa ein Mittelwert der letzten fünf Minuten, um ein Beispiel zu geben.

Wird eine Frequenzverschiebung des frei schwingenden Oszillators 152 der Überwachungseinrichtung der Überwachungseinrichtung 200' detektiert, die auf das Vorhandensein eines Transponders im Umgebungsbereich hinweist, aktiviert dann der Prozessor 108 die Luftschnittstelle 102, 105 bzw. 102, 104, 106, schaltet also in einen Kopplungs-Betriebszustand der Lese-Einheit 100 um, in dem die Datenkommunikation zwischen dem Transponder und der Lese-Einheit erfolgen kann, ggf. nach einer vorangehenden Überprüfung mittels der Luftschnittstelle 102,105 bzw. 102, 104, 106, ob überhaupt ein Transponder im Nahfeldbereich vorhanden ist, mit dem kommuniziert werden kann. Eine solche Überprüfung könnte über die Detektion einer Dämpfung des Wechselfelds erfolgen oder dadurch, dass an den Transponder insbesondere durch eine Lastmodulation des Wechselfeldes ein Signal gesendet wird, sich als kommunikationsbereit zu melden. Ein Transponder könnte auch so ausgeführt oder programmiert sein, dass er nach Detektion eines Wechselfeldes bzw. - im Falle eines passiven Transponders - nach Einsetzen der Bestromung des Transponders aus dem Wechselfeld ein Signal sendet (insbesondere durch Lastmodulation des Wechselfelds), das seine Präsenz anzeigt.

Bevorzugt ist ein Polling mittels der Überwachungseinrichtung 200' realisiert, bei dem der Mikroprozessor 108 den Oszillator durch sein vom Ausgang A_det ausgegebenes Steuer- und Versorgungssignal ein- und ausschaltet und an seinem Eingang E_z die Frequenz des rückgeführten Spannungssignals zählt, während der Oszillator aktiv ist. Die Umschalter 210, 212 schalten die Antenne entweder zum Oszillator zur Transponder-Detektion oder zum Transceiver 105, insbesondere RFID- bzw. NFC-Transceiver, zur Kommunikation mit dem erkannten Transponder, wobei die Umschalter gemäß der in Fig. 4 realisierten Lösung ebenfalls durch das Signal vom Ausgang A_det gesteuert werden können. Anstelle der Umschalter können auch PIN-Dioden oder HF-Analog-Umschalter eingesetzt werden.

Im "Schlafmodus", also dem Ruhe-Betriebszustand sind bevorzugt alle Komponenten bis auf einen sehr energiearmen "Watchdog/Timer" in einem Modus verschwindenden oder sehr geringen Energieverbrauchs. Bei dem "Watchdog" kann es sich um einen internen "Watchdog" des Prozessors handeln.

Der "Watchdog" weckt den Prozessor (ggf. Mikrocontroller) regelmäßig zur Transponder-Detektion auf. Zuerst wird der Colpitt-Oszillator 252 aktiviert und hierzu über A_det bestromt. Nach wenigen hunderten Nanosekunden kann der Prozessor bereits anfangen, die Anzahl der Pulse am Eingang E_z für eine vordefinierte Zeit, z.B. 200 µs, zu zählen für die Frequenzmessung. Dann kann der Oszillator ausgeschaltet werden und der aktuelle Zählerwert mit einem Referenzwert verglichen werden, um festzustellen, ob sich ein Transponder in der Nähe befindet. Im Falle einer erfolgreichen Detektion eines Transponders wird durch Ausgabe des Pegels 0 am Ausgang A_det die Antenne 102 zum Transceiver 105 umgeschaltet und zugleich mittels eines Pegels 1 am Ausgang Trsc.-Enable des Prozessors 108 aktiviert. Nach Durchführung der Datenkommunikation wird der Transceiver 105 wieder deaktiviert und die Antenne dem Oszillator zugeschaltet.

Ein weiterer Vorteil des der Ausführungsvariante der Fig. 4 zugrunde liegenden Ansatzes liegt darin, dass, je nach Dimensionierung des Oszillators, eine sehr hohe Empfindlichkeit für die Transponder-Detektion erzielt werden kann. Es können in der Praxis unterschiedliche Frequenzänderungen von ein paar % bis zu 100%, nämlich dass die Schwingung des Oszillators zum Erliegen kommt, bei verschiedenen Dimensionierungen des Oszillators beobachtet werden, wenn sich ein RFID-Transponder, insbesondere eine Standard-RFID-Mifare-Karte, bis auf eine Distanz von ca. 4 cm der Lese-Einheit nähert.

Angemerkt sei, dass man aufgrund der sehr energiesparsamen Transponder-Detektion auch ohne weiteres vorsehen kann, dass die Überwachungseinrichtung 200' öfter als bei den vorangehenden Annahmen, beispielsweise zwei bis drei Mal pro Sekunde, aktiviert wird, um zuverlässig auch nur auf sehr kurz in den Umgebungsbereich der Lese-Einiheit zugeführte Transponder ansprechen zu können und die Datenkommunikation mit diesen starten zu können.

Angemerkt sei ferner, dass eine erfindungsgemäße Überwachungseinrichtung, etwa die Überwachungsschaltung 200' oder alternativ die Überwachungsschaltung 200, in einen RFID/NFC-Leser-Modul, insbesondere Transceiver-Chip, direkt integriert sein könnte, ohne die Kosten für ein solches Bauteil nennenswert zu erhöhen.

Noch einmal Bezug nehmend auf das Schließsystem der Fig. 1 und 2 wird daran gedacht, dass die Vermittlungseinheit 100 in einem Programmier-Betriebsmodus mittels des Prozessors 108 über die Luftschnittstelle 110, 112 der Vermittlungseinheit 100 und die Luftschnittstelle 17, 18 der Schließeinheit 12 die Programmierung des Prozessors 14 oder/und die Eingabe von Schließ- und Identifizierungs- und Berechtigungsdaten in den Speicherbereich 16 des Prozessors 14 ermöglicht. Hierzu kann die Vermittlungseinheit 100 über die Luftschnittstelle 102, 104, 106 entsprechend angesteuert werden, etwa durch einen eine komplementäre Luftschnittstelle aufweisenden transportablen Computer. Besonders vorteilhaft ist hierbei, wenn der Transceiver 106 ein NFC-Transceiver ist, der für einen solchen Programmiermodus in einen Client-Modus oder einen Peer-to-Peer-Modus schaltbar ist, um mittels einem entsprechenden, als Master dienenden oder ebenfalls im Peer-to-Peer-Modus betriebenen Transceiver des tragbaren Computers zusammen zu wirken.

Mit einer als Vermittlungseinheit ausgeführten Lese-Einheit kann vorteilhaft und ohne nennenswerten Installationsaufwand ein Schließsystem, wie mit den oben angegebenen Produkten der Anmelderin bereitgestellt, dafür tauglich gemacht werden, mit Identmedien in Form von passiven NFC/RFID-Transpondern etwa in Kartenform zusammen zu wirken, die direkt mit der Schließeinheit etwa eines digitalen Schließzylinders nicht kommunizieren und von dieser auch nicht mit Energie versorgt werden können. Parallel können aktive Transponder und Identmedien entsprechend den angesprochenen Produkten der Anmelderin verwendet werden. Die Bedienungsfunktionalität hinsichtlich der Verwendung des NFC/RFID-Transponders in Bezug auf das Entsperren der Schließeinheit des Schließsystems entspricht der Bedienungsfunktionalität des Transponders in Bezug auf übliche NFC/RFID-Lese-Geräte. Es muss nur der Transponder in den Nahbereich der Lese-Einheit gehalten werden, worauf dann im Falle einer positiven Feststellung der Identität bzw. der Berechtigung in Folge des Zusammenwirkens mit der Schließeinheit über die Vermittlungseinheit die Schließeinheit den Zugang durch die Tür durch entsprechende Entriegelung bzw. Freigabe einer Entriegelung freigibt. Man kann in diesem Zusammenhang vorsehen, dass für einen definierten Zeitraum ab positiver Identitätsfeststellung bzw. Berechtigungsfeststellung ein Entriegelungszustand bzw. Zustand der Freigabe der Entriegelung eingenommen wird, der einem Zeitraum entspricht, die ein Benutzer dafür braucht, nach Zufuhr des Transponders in die Nähe der Vermittlungseinheit die Tür tatsächlich zu öffnen.

Auf Basis der Erfindungs- und Weiterbildungsvorschläge ist insbesondere auch eine Erweiterung eines schon bestehenden Schließsystems um die Verwendbarkeit von passiven RFID/NFC-Identmedien möglich, da batteriebetriebene Vermittlungseinheiten zum Einsatz kommen können, die ohne jeden elektrischen Installationsaufwand in Zuordnung zu einer jeweiligen Schließeinheit positioniert werden können, je nach Anwendungssituation auf einer oder beiden Seiten einer Tür oder dergleichen.

## Patentansprüche

1. System (10) zur Identitätsfeststellung oder Berechtigungsfeststellung und zum Ermöglichen bzw. Verhindern eines physikalischen Zugangs zu einer Zieleinrichtung, umfassend:
A) eine der Zieleinrichtung zugeordnete erste Einheit (12), welche eine Feststelleinrichtung (14) aufweist, die dafür ausgeführt ist, auf Grundlage eines Datenaustausches über eine erste Luftschnittstelle (16, 18) der ersten Einheit mit einer zweiten Einheit (100) eine Identität oder eine Berechtigung festzustellen,
wobei die erste Luftschnittstelle für einen drahtlosen Datenaustausch über eine erste Reichweite ausgelegt ist,
wobei die erste Einheit (12) wenigstens einen Aktor (20) aufweist oder der ersten Einheit eine gesonderte Aktoreinrichtung mit wenigstens einem Aktor zugeordnet ist, und
wobei die erste Einheit für eine Betätigung oder Auslösung des Aktors in Abhängigkeit von der Feststellung einer Identität bzw. Berechtigung durch die Feststelleinrichtung ausgeführt ist;
B) wenigstens eine der ersten Einheit (12) zugeordnete zweite Einheit (100), welche eine Mitteilungseinrichtung (108) aufweist, die dafür ausgeführt ist, auf Grundlage von vorhandenen Identifizierungsdaten oder Berechtigungsdaten und des über die erste Luftschnittstelle und eine zweite Luftschnittstelle (110, 112) der zweiten Einheit über die erste Reichweite durchgeführten Datenaustausches der Feststelleinrichtung (14) der ersten Einheit (12) die Identität oder die Berechtigung mitzuteilen;
C) wenigstens ein tragbares Identmedium (50), welches zumindest Identifizierungsdaten trägt und eine Identmedium-Luftschnittstelle (52, 54) aufweist, welche für ein drahtloses Auslesen oder Übertragen
a) zumindest der Identifizierungsdaten oder
b) auf Grundlage der Identifizierungsdaten von einer Feststelleinrichtung (56) des Identmediums im Falle einer positiven Feststellung einer Identität oder Berechtigung gelieferte Identifizierungsdaten oder Berechtigungsdaten über eine zweite Reichweite ausgelegt ist;
D) wobei die Mitteilungseinrichtung (108) der zweiten Einheit (100) ferner dafür ausgeführt ist, über eine dritte Luftschnittstelle (102, 104, 106; 102, 105) der zweiten Einheit und die Identmedium-Luftschnittstelle (52, 54) über die zweite Reichweite zumindest die Identifizierungsdaten oder Berechtigungsdaten von dem Identmedium zu empfangen oder aus diesem auszulesen und
c) diese Daten oder
d) auf Grundlage dieser Daten von einer Feststellfunktionalität der Mitteilungseinrichtung (108) der zweiten Einheit (100) im Falle einer positiven Feststellung einer Identität oder Berechtigung gelieferte Identifizierungsdaten oder Berechtigungsdaten
als vorhandene Identifzierungsdaten bzw. Berechtigungsdaten für die Mitteilung einer Identität bzw. Berechtigung an die Feststelleinrichtung (14) der ersten Einheit (12) zu verwenden, und
E) wobei die erste Reichweite merklich größer als die zweite Reichweite ist

2. System nach Anspruch 1, **dadurch gekennzeichnet, dass** die Feststelleinrichtung (14) der ersten Einheit (12) eine Authentifizierungseinrichtung ist und dafür ausgeführt ist, die mitgeteilte Identität bzw. Berechtigung zu authentifizieren und die Mitteilungseinrichtung (108) eine Authentisierungseinrichtung ist und dafür ausgeführt ist, die mitgeteilte Identität bzw. Berechtigung durch Übermittlung von Authentisierungsdaten über die zweite (110, 112) und die erste (16, 18) Luftschnittstelle nachzuweisen.

3. System nach Anspruch 2, **dadurch gekennzeichnet, dass** die als Authentisierungseinrichtung dienende Mitteilungseinrichtung (108) dafür ausgeführt ist, die Authentisierungsdaten über die dritte Lufischnittstelle (102, 104, 106; 102, 105) und die Identmedium-Luftschnittstelle (52, 54) von dem Identmedium (50) zu empfangen oder aus diesem auszulesen.

4. System nach einem der Ansprüche 1 bis 3, **dadurch gekennzeichnet, dass** die Feststelleinrichtung (14) der ersten Einheit (12) eine Authentifizierungseinrichtung ist und dafür ausgeführt ist, die mitgeteilte Identität bzw. Berechtigung zu authentifizieren, und eine Authentisierungseinrichtung (56) des Identmediums (50) dafür ausgeführt ist, unter Vermittlung der Mitteilungseinrichtung (108) die mitgeteilte Identität bzw. Berechtigung durch Übermittlung von Authentisierungsdaten über die dritte Luftschnittstelle (102, 104, 106; 102, 105) und die Identmedium-Luftschnittstelle (52, 54) sowie über die zweite (110, 112) und die erste (16, 18) Luftschnittstelle nachzuweisen.

5. System nach einem der Ansprüche 1 bis 4, **dadurch gekennzeichnet, dass** die Mitteilungseinrichtung (108) eine Authentifizierungseinrichtung ist und dafür ausgeführt ist, für die positive Feststellung einer Identität bzw. Berechtigung diese zu authentifizieren, und eine Authentisierungseinrichtung (56) des Identmediums (50) dafür ausgeführt ist, die Identität bzw. Berechtigung durch Übermittlung von Authentisierungsdaten über die dritte Luftschnittstelle (102, 104, 106; 102, 105) und die Identmedium-Luftschnittstelle (52, 54) nachzuweisen.

6. System nach einem der Ansprüche 1 bis 5, **dadurch gekennzeichnet, dass** die Feststelleinrichtung (56) des Identmediums (50) eine Authentifizierungseinrichtung ist und dafür ausgeführt ist, für die positive Feststellung einer Identität bzw. Berechtigung diese zu authentifizieren, vorzugsweise auf Grundlage einer Interaktion mit einem Benutzer.

7. System nach einem der Ansprüche 2 bis 6, **dadurch gekennzeichnet, dass** die Authentifizierungseinrichtung (14) der ersten Einheit (12) und die Authentisierungseinrichtung (108; 56) der zweiten Einheit (100) bzw. des Identmediums (50) bzw. dass die Authentifizierungseinrichtung (108) der zweiten Einheit (100) und die Authentisierungseinrichtung (56) des Identmediums (50) dafür ausgeführt sind, für die Durchführung einer Challenge-Response-Authentifizierung zusammenzuwirken.

8. System nach einem der Ansprüche 1 bis 7, **dadurch gekennzeichnet, dass** die erste Reichweite um mindestens etwa einen Faktor 3 bis 10 größer als die zweite Reichweite ist.

9. System nach Anspruch 8, **dadurch gekennzeichnet, dass** die erste Reichweite mindestens etwa 20 cm, vorzugsweise mindestens etwa 70 cm, höchstvorzugsweise mindestens etwa 2,5 m beträgt und die zweite Reichweite maximal etwa 10 cm, vorzugsweise maximal etwa 5 cm beträgt.

10. System nach einem der Ansprüche 1 bis 9, **gekennzeichnet durch** eine als zweite Einheit (100) dienende Lese-Einheit (100), vorzugsweise RFID- oder NFC-Lese-Einheit (100), umfassend:
- wenigstens eine Luftschnittstelle (102, 104, 106; 102, 105), die dafür ausgeführt ist, in wenigstens einem Kopplungs-Betriebszustand der Lese-Einheit wenigstens eines von einem elektrischen Wechselfeld und einem magnetischen Wechselfeld und einem elektromagnetischen Strahlungs-Wechselfeld zu erzeugen, um induktiv oder/und kapazitiv oder/und elektromagnetisch an einen in einem Zuordnungsbereich befindlichen Transponder (50), ggf. RFID- oder NFC-Transponder (50), koppeln zu können;
- eine Steuereinrichtung (108), die dafür ausgeführt oder programmiert ist, in dem Kopplungs-Betriebszustand mittels der Luftschnittstelle auf einen angekoppelten Transponder (50) anzusprechen, zur Durchführung einer Datenkommunikation umfassend zumindest eines von einem Auslesen wenigstens eines Datenwerts aus dem Transponder und einem Empfangen wenigstens eines vom Transponder gesendeten Datenwerts und einem Senden wenigstens eines Datenwerts an den Transponder, oder/und zumindest im Sinne eines Erfassens des Vorhandenseins des angekoppelten Transponders; und
- eine die Steuereinrichtung und die Luftschnittstelle mit elektrischer Betriebsenergie versorgende elektrische Energieversorgung (120);
wobei in wenigstens einem Ruhe-Betriebszustand der Lese-Einheit (100) zumindest die Luftschnittstelle (102, 104, 106; 102, 105) ausgeschaltet ist, so dass der elektrische Energieverbrauch der Luftschnittstelle zumindest reduziert ist;
wobei in dem Kopplungs-Betriebszustand der Lese-Einheit (100) die Luftschnittstelle (102, 104, 106; 102, 105) eingeschaltet ist, so dass ein im Zuordnungsbereich befindlicher Transponder (50) induktiv bzw. kapazitiv bzw. elektromagnetisch an diese ankoppeln kann;
wobei die Steuereinrichtung (108) dafür ausgeführt ist oder programmiert ist, selbsttätig zwischen mehreren, den Ruhe-Betriebszustand und den Kopplungs-Betriebsstand umfassenden Betriebszuständen umzuschalten, und wobei die Luftschnittstelle (102, 104, 106; 102, 105) der Lese-Einheit die dritte Luftschnittstelle darstellt, die zum Koppeln mit dem als Identmedium dienenden Transponder (50) vorgesehen ist, und eine weitere, der ersten Einheit (12) zugeordnete Luftschnittstelle (110, 112) der Lese-Einheit (100) die zweite Luftschnittstelle darstellt.

11. System nach Anspruch 10, **dadurch gekennzeichnet, dass** eine der Steuereinrichtung (108) zugeordnete oder zugehörige, gewünschtenfalls eine eigene Überwachungs-Luftschnittstelle (102, 202, 204) vorsehende Überwachungseinrichtung (200) dafür ausgeführt ist, in einem Überwachungs-Kopplungsbetriebszustand auf einen Energieverlust des Wechselfelds oder eines von der Überwachungs-Luftschnittstelle erzeugten Überwachungs-Wechselfelds durch den angekoppelten Transponder (50) anzusprechen, um das Vorhandensein eines Transponders in dem Zuordnungsbereich oder in einem Umgebungsbereich, in welchen sich das Überwachungs-Wechselfeld erstreckt, festzustellen.

12. System nach Anspruch 10 oder 11, **gekennzeichnet durch** eine von der Luftschnittstelle (102, 104, 106; 102, 105) vorzugsweise unabhängige, der Steuereinrichtung (108) zugeordnete oder zugehörige Überwachungseinrichtung (200'), die dafür ausgeführt ist, auf wenigstens eine Änderung in einem Umgebungsbereich der Lese-Einheit oder wenigstens eine Rückwirkung aus dem Umgebungsbereich anzusprechen, wobei die Steuereinrichtung (108) dafür ausgeführt oder programmiert ist, auf ein Ansprechen der Überwachungseinrichtung (200') auf die Änderung bzw. Rückwirkung mit einer Umschaltung in den Kopplungs-Betriebszustand zu reagieren, um mittels der Luftschnittsstelle (102, 104, 106; 102, 105) oder einer Luftschnittstelle zu überprüfen, ob ein Transponder (50) im Zuordnungsbereich vorhanden ist, oder/und um mittels der Luftschnittsstelle (102, 104, 106; 102, 105) die Datenkommunikation aufzunehmen.

13. System nach einem der Ansprüche 1 bis 12, **dadurch gekennzeichnet, dass** die erste Einheit (12) eine Schließeinheit (12) ist, die in Abhängigkeit von einer erfolgreichen Identifizierung vermittels des Aktors den physikalischen Zugang freigibt, beispielsweise das Öffnen einer Tür auslöst oder entsperrt.

## Claims

1. System (10) for establishing identity or authorisation and for allowing or preventing physical access to a target device, comprising:
A) a first unit (12) assigned to a target device, which first unit comprises a detecting device (14), which is designed to detect an identity or authorisation on the basis of a data exchange via a first air interface (16, 18) of the first unit to a second unit (100),
wherein the first air interface is set up for wireless data exchange over a first operational range,
wherein the first unit (12) comprises at least one actuator (20) or the first unit is assigned a separate actuating device with at least one actuator, and wherein the first unit is designed for actuating or triggering the actuator as a function of the detecting device establishing an identity or authorisation;
B) at least one second unit (100) assigned to the first unit (12), which second unit comprises a communication device (108), which is designed to communicate the identity or authorisation on the basis of existing identification data or authorisation data and the data exchange of the detecting device (14) of the first unit (12) performed via the first air interface and a second air interface (110, 112) of the second unit over the first operational range;
C) at least one portable identification medium (50) which carries at least identification data and comprises an identification medium air interface (52, 54), which is set up for the wireless reading or transmission over a second operational range,
a) of at least the identification data or
b) of identification data or authorisation data supplied on the basis of identification data from a detecting device (56) of the identification medium in the case of positive identification or authorisation
D) wherein the communication device (108) of the second unit (100) is also designed, to receive via a third air interface (102, 104, 106; 102, 105) of the second unit and the identification medium air interface (52, 54) over the second operational range at least the identification data or authorisation data of the identification medium or read out from the latter and
c) to use said data or
d) identification data or authorisation data supplied on the basis of said data by a detecting function of the communication device (108) of the second unit (100) in the case of positively determining an identify or authorisation,
as existing identification data or authorisation data for the communication of an identity or authorisation to the detecting device (14) of the first unit (12) and
E) wherein the first operational range is significantly greater than the second operational range.

2. System according to claim 1, **characterised in that** the detecting device (14) of the first unit (12) is an authentication device (14) and is designed to authenticate the communicated identify or authorisation, and the communication device (108) is an authentication device and is designed to determine the communicated identity or authorisation by communicating authentication data via the second (110, 112) and the first (16, 18) air interface.

3. System according to claim 2, **characterised in that** the communication device (108) used as an authentication device is designed to receive or read out from the latter the authentication data via the third air interface (102, 104, 106; 102,105) and the identification medium air interface (52, 54) from the identification medium (50).

4. System according to one of claims 1 to 3, **characterised in that** the detecting device (14) of the first unit (12) is an authentication device and is designed to authenticate the communicated identity or authorisation, and an authentication device (56) of the identification medium (50) is designed to detect by communication of the communication device (108) the communicated identity or authorisation by communicating authentication data via the third air interface (102, 104, 106; 102, 105) and the identification medium-air interface (52, 54) and via the second (110, 112) and the first (16, 18) air interface.

5. System according to one of claims 1 to 4, **characterised in that** the communication device (108) is an authentication device and is designed for the positive detection of an identity or authorisation to authenticate the latter, and an authentication device (56) of the identification medium (50) is designed to detect the identity or authorisation by communicating authentication data via the third air interface (102, 104, 106; 102, 105) and the identification medium air interface (52, 54).

6. System according to one of claims 1 to 5, **characterised in that** the detection device (56) of the identification medium (50) is an authentication device and is designed for the positive detection of an identify or authorisation to authenticate the latter, preferably on the basis of an interaction with the user.

7. System according to one of claims 2 to 6, **characterised in that** the authentication device (14) of the first unit (12) and the authentication device (108; 56) of the second unit (100) or identification medium (50) or the authentication device (108) of the second unit (100) and the authentication device (56) of the identification medium (50) are designed to cooperate in performing a challenge-response authentication.

8. System according to one of claims 1 to 7, **characterised in that** the first operational range is greater than the second operational range by a factor of 3 to 10.

9. System according to claim 8, **characterised in that** the first operational range is least 20 cm, preferably at least 70 cm, most preferably at least 2.5 m, and the second operational range is a maximum of 10 cm, preferably a maximum of 5 cm.

10. System according to one of claims 1 to 9, **characterised by** a reading unit (100) used as a second unit (100), preferably a RFID or NFC reading unit (100), comprising:
- at least one air interface (102, 104, 106; 102, 105), which is designed in at least one coupling operating state of the reading unit to generate at least one out of an electrical alternating field and a magnetic alternating field and an electromagnetic radiation alternating field, in order to couple inductively and/or capacitively and/or electromagnetically to a transponder (50) located in an assignment area, possibly a RFID or NFC transponder (50);
- a control device (108) which is designed or programmed to respond in the coupling operating state by means of the air interface to a coupled transponder (50), to perform data communication comprising at least one data value from the transponder from a read-out and receiving at least one data value sent by the transponder and sending at east one data value to the transponder and/or at least within the meaning of detecting the existence of the coupled transponder; and
- an electrical power supply (120) supplying the control device and the air interface with electrical operating energy;
wherein in at least one rest state of the reading unit (100) at least the air interface (102, 104, 106; 102, 105) is switched off, so that the electrical power consumption of the air interface is at least reduced;
wherein in the coupling operating state of the reading unit (100) the air interface (102, 104, 106; 102, 105) is switched on so that a transponder (50) located in the allocation area can couple inductively or capacitively or electromagnetically with the latter; wherein the control device (108) is designed or programmed to switch automatically between several operating states comprising the rest state and the coupling state, and wherein the air interface (102, 104, 106; 102, 105) of the reading unit represents the third air interface which is provided for coupling with the transponder (50) used as the identification medium and an additional air interface (110, 112) of the reading unit (100) assigned to the first unit (12) represents the second air interface.

11. System according to claim 10, **characterised in that** a monitoring device (200) assigned or allocated to the control device (108), if necessary providing a separate monitoring air interface (102, 202, 204) is designed in a monitoring coupling operating state to respond through the coupled transponder (50) to a loss of power in the alternating field or a monitoring alternating field generated by the monitoring air interface, in order to determine the presence of a transponder in the allocation area or in a surrounding area into which the monitoring alternating field extends.

12. System according to claim 10 or 11, **characterised by** a monitoring device (200') which is preferably independent of the air interface (102, 104, 106; 102, 105) and is assigned or allocated to the control device (108), which monitoring device is designed to respond to at least one change in the surrounding area of the reading unit or at least one reaction from the surrounding area, wherein the control device (108) is designed or programmed to react to a response of the monitoring device (200') to the change or reaction by switching into the coupling operating state, in order to check by means of the air interface (102, 104, 106; 102, 105) or an air interface, whether a transponder (50) is available in the allocation area, and/or to pick up the data communication by means of the air interface (102, 104, 106; 102, 105).

13. System according to one of claims 1 to 12, **characterised in that** the first unit (12) is a locking unit (12), which as a function of a successful identification by means of the actuator releases the physical access, for example triggers the opening of a door or unlocks the latter.

## Revendications

1. Système (10) pour constater une identité ou autorisation et pour permettre ou empêcher un accès physique à un dispositif cible, comprenant :
A) une première unité (12) attribuée au dispositif cible et qui présente un dispositif de constatation (14) réalisé dans le but de constater une identité ou une autorisation sur la base d'un échange de données à travers une première interface aérienne (16, 18) de la première unité avec une deuxième unité (100),
dans lequel la première interface aérienne est conçue pour un échange de données sans fil sur une première portée,
dans lequel la première unité (12) présente au moins un activateur (20), ou la première unité se voit attribuer un dispositif activateur séparé avec au moins un activateur, et
dans lequel la première unité est réalisée pour un actionnement ou un déclenchement de l'activateur en fonction de la constatation d'une identité ou d'une autorisation par le dispositif de constatation ;
B) au moins une deuxième unité (100) attribuée à la première unité (12) présentant un dispositif de communication (108) réalisé pour communiquer l'identité ou l'autorisation, sur la base de données d'identification ou de données d'autorisation existantes et de l'échange de données du dispositif de constatation (14) de la première unité (12), effectué à travers la première interface aérienne et une deuxième interface aérienne (110, 112) de la deuxième unité ;
C) au moins un support d'identification portable (50) portant au moins des données d'identification et une interface aérienne de support d'identification (52, 54) qui est conçue pour extraire ou transmettre sans fil
a) au moins les données d'identification ou
b) des données d'identification ou des données d'autorisation fournies sur la base des données d'identification d'un dispositif de constatation (56) du support d'identification dans le cas d'une constatation positive d'une identité ou autorisation,
sur une deuxième portée ;
D) dans lequel le dispositif de communication (108) de la deuxième unité (100) est en outre réalisé pour recevoir à travers une troisième interface aérienne (102, 104, 106 ; 102, 105) de la deuxième unité et de l'interface aérienne de support d'identification (52, 54) sur la deuxième portée au moins les données d'identification ou les données d'autorisation du support d'identification, ou pour les extraire de celui-ci, et
pour utiliser
c) ces données ou
d) des données d'identification ou des données d'autorisation fournies sur la base de ces données d'une fonction de constatation du dispositif de communication (108) de la deuxième unité (100) dans le cas d'une constatation positive d'une identité ou autorisation
comme des données d'identification ou données d'autorisation existantes pour la communication d'une identité ou autorisation au dispositif de constatation (14) de la première unité (12), et
E) dans lequel la première portée est nettement supérieure à la deuxième portée.

2. Système selon la revendication 1, **caractérisé en ce que** le dispositif de constatation (14) de la première unité (12) est un dispositif d'authentification et réalisé pour authentifier l'identité ou autorisation communiquée, et le dispositif de communication (108) est un dispositif d'authentification propre et réalisé pour prouver l'identité ou autorisation communiquée par la transmission de données d'authentification propre à travers la deuxième (110, 112) et la première (16, 18) interface aérienne.

3. Système selon la revendication 2, **caractérisé en ce que** le dispositif de communication (108) servant de dispositif d'authentification propre est réalisé pour recevoir les données d'authentification propre à travers la troisième interface aérienne (102, 104, 106 ; 102, 105) et l'interface aérienne de support d'identification (52, 54) à partir du support d'identification (50) ou pour les extraire de celui-ci.

4. Système selon l'une quelconque des revendications 1 à 3, **caractérisé en ce que** le dispositif de constatation (14) de la première unité (12) est un dispositif d'authentification et réalisé pour authentifier l'identité ou autorisation communiquée, et un dispositif d'authentification propre (56) du support d'identification (50) est réalisé pour prouver par le biais du dispositif de communication (108) l'identité ou autorisation communiquée par la transmission de données d'authentification propre à travers la troisième interface aérienne (102, 104, 106 ; 102, 105) et l'interface aérienne de support d'identification (52, 54) ainsi qu'à travers la deuxième (110, 112) et la première (16, 18) interface aérienne.

5. Système selon l'une quelconque des revendications 1 à 4, **caractérisé en ce que** le dispositif de communication (108) est un dispositif d'authentification et réalisé pour authentifier une identité ou autorisation en vue de sa constatation positive, et un dispositif d'authentification propre (56) du support d'identification (50) est réalisé pour prouver l'identité ou autorisation par la transmission de données d'authentification propre à travers la troisième interface aérienne (102, 104, 106 ; 102, 105) et l'interface aérienne de support d'identification (52, 54).

6. Système selon l'une quelconque des revendications 1 à 5, **caractérisé en ce que** le dispositif de constatation (56) du support d'identification (50) est un dispositif d'authentification et réalisé pour authentifier une identité ou autorisation en vue de sa constatation positive, de préférence sur la base d'une interaction avec un utilisateur.

7. Système selon l'une quelconque des revendications 2 à 6, **caractérisé en ce que** le dispositif d'authentification (14) de la première unité (12) et le dispositif d'authentification propre (108 ; 56) de la deuxième unité (100) ou du support d'identification (50), ou **en ce que** le dispositif d'authentification (108) de la deuxième unité (100) et le dispositif d'authentification propre (56) du support d'identification (50), sont réalisés pour coopérer en vue de l'exécution d'une authentification de type « challenge-response ».

8. Système selon l'une quelconque des revendications 1 à 7, **caractérisé en ce que** la première portée est supérieure à la deuxième portée au moins d'un facteur de 3 à 10.

9. Système selon la revendication 8, **caractérisé en ce que** la première portée mesure au moins environ 20 cm, de préférence au moins environ 70 cm, de la plus grande préférence au moins environ 2,5 m, et que la deuxième portée mesure au maximum environ 10 cm, de préférence au maximum environ 5 cm.

10. Système selon l'une quelconque des revendications 1 à 9, **caractérisé par** une unité de lecture (100), de préférence une unité de lecture RFID ou NFC (100), servant de deuxième unité (100), comprenant :
- au moins une interface aérienne (102, 104, 106 ; 102, 105) qui, dans au moins un état de fonctionnement de couplage de l'unité de lecture, est réalisée pour générer au moins un élément parmi un champ alternatif électrique et un champ alternatif magnétique et un champ alternatif de rayonnement électromagnétique, afin de permettre un couplage inductif ou/et capacitif ou/et électromagnétique avec un transpondeur (50) se trouvant dans une zone d'attribution, le cas échéant un transpondeur RFID ou NFC (50) ;
- un dispositif de commande (108) qui est réalisé ou programmé pour répondre à l'état de fonctionnement de couplage au moyen de l'interface aérienne à un transpondeur (50) couplé, en vue d'effectuer une communication de données comprenant au moins un élément parmi une extraction d'au moins une valeur de données du transpondeur et une réception d'au moins une valeur de données envoyée par le transpondeur et un envoi d'au moins une valeur de données au transpondeur, ou/et au moins en termes de détection de l'existence du transpondeur couplé ; et
- une alimentation électrique (120) alimentant le dispositif de commande et l'interface aérienne en énergie opérationnelle électrique,
dans lequel, au moins dans un état de fonctionnement de repos de l'unité de lecture (100), au moins l'interface aérienne (102, 104, 106 ; 102, 105) est mise hors tension, de sorte que la consommation d'énergie électrique de l'interface aérienne est au moins réduite ;
dans lequel, à l'état de fonctionnement de couplage de l'unité de lecture (100), l'interface aérienne (102, 104, 106 ; 102, 105) est mise sous tension, de sorte qu'un transpondeur (50) se trouvant dans la zone d'attribution peut être couplé avec celle-ci de façon inductive ou capacitive ou électromagnétique ;
dans lequel le dispositif de commande (108) est réalisé ou programmé pour commuter automatiquement entre plusieurs états de fonctionnement comprenant l'état de fonctionnement de repos et l'état de fonctionnement de couplage, et
dans lequel l'interface aérienne (102, 104, 106 ; 102, 105) de l'unité de lecture représente la troisième interface aérienne qui est prévue pour un couplage avec le transpondeur (50) servant de support d'identification, et une autre interface aérienne (110, 112) de l'unité de lecture (100), attribuée à la première unité (12), représente la deuxième interface aérienne.

11. Système selon la revendication 10, **caractérisé en ce qu'**un dispositif de surveillance (200), attribué ou associé au dispositif de commande (108), éventuellement muni de sa propre interface aérienne de surveillance (102, 202, 204), est réalisé pour répondre dans un état de fonctionnement de couplage de surveillance à une perte d'énergie du champ alternatif ou d'un champ alternatif de surveillance généré par l'interface aérienne de surveillance, par l'intermédiaire du transpondeur (50) couplé afin de constater la présence d'un transpondeur dans la zone d'attribution ou dans une zone environnante dans laquelle s'étend le champ alternatif de surveillance.

12. Système selon les revendications 10 ou 11, **caractérisé par** un dispositif de surveillance (200'), de préférence indépendant de l'interface aérienne (102, 104, 106 ; 102, 105), attribué ou associé au dispositif de commande (108), qui est réalisé pour répondre à au moins un changement dans la zone environnante de l'unité de lecture ou à au moins une réaction provenant de la zone environnante, le dispositif de commande (108) étant réalisé ou programmé pour réagir suite à une réponse du dispositif de surveillance (200') à un changement ou une réaction par une commutation vers l'état opérationnel de couplage, afin de vérifier au moyen de l'interface aérienne (102, 104, 106 ; 102, 105) ou d'une interface aérienne si un transpondeur (50) est présent dans la zone d'attribution, ou/et pour établir la communication de données au moyen de l'interface aérienne (102, 104, 106 ; 102, 105).

13. Système selon l'une quelconque des revendications 1 à 12, **caractérisé en ce que** la première unité (12) est une unité à fermeture (12), qui, en fonction de l'identification réussie au moyen de l'activateur, libère l'accès physique, par exemple en déclenchant ou débloquant l'ouverture d'une porte.
